(19) Europäisches Patentamt / European Patent Office / Office européen des brevets

(11) **EP 4 653 992 A1**

(12) **EUROPEAN PATENT APPLICATION**
published in accordance with Art. 153(4) EPC

(43) Date of publication:
**26.11.2025 Bulletin 2025/48**

(21) Application number: **24881758.7**

(22) Date of filing: **25.10.2024**

(51) International Patent Classification (IPC):
**G06F 3/043** $^{(2006.01)}$     **G06F 3/041** $^{(2006.01)}$
**H04R 1/10** $^{(2006.01)}$

(52) Cooperative Patent Classification (CPC):
**G06F 3/01; G06F 3/041; G06F 3/043; G06F 3/16; H04R 1/10**

(86) International application number:
**PCT/CN2024/127437**

(87) International publication number:
**WO 2025/087399 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.10.2023 CN 202311407961**

(71) Applicant: **Shenzhen Shokz Co., Ltd.**
**Shenzhen, Guangdong 518108 (CN)**

(72) Inventors:
• **YUAN, Yongshuai**
  **Shenzhen, Guangdong 518108 (CN)**
• **DENG, Wenjun**
  **Shenzhen, Guangdong 518108 (CN)**
• **LIAO, Fengyun**
  **Shenzhen, Guangdong 518108 (CN)**
• **QI, Xin**
  **Shenzhen, Guangdong 518108 (CN)**

(74) Representative: **Wang, Bo**
**Panovision IP**
**Ebersberger Straße 3**
**85570 Markt Schwaben (DE)**

(54) **DEVICE FOR USING FRICTION SIGNAL TO IDENTIFY TOUCH OPERATION**

(57)    A device for using a friction signal to identify a touch operation. At least part of the surface of the device comprises a sliding regions, the sliding regions include a first sliding region and a second sliding region, the first sliding region and the second sliding region have different features, and the features are manifested in distinguishability of a friction signal generated by a finger sliding in the first sliding region and a friction signal generated by a finger sliding in the second sliding region in a time domain or a frequency domain.

**150**

long axis direction

155
153
154
151
152
156

**FIG. 2A**

EP 4 653 992 A1

# Description

## CROSS-REFERENCE TO RELATED APPLICATIONS

This application claims priority to Chinese application No. 202311407961.X, filed on O ctober 27, 2023, the entire contents of which are incorporated herein by reference.

## TECHNICAL FIELD

The present disclosure relates to the field of acoustic technology, and in particular, to methods and devices for identifying a touch operation using friction signals.

## BACKGROUND

The use of touch control technology to implement touch operations on acoustic devices is becoming increasingly common. Currently, existing touch technologies mainly include capacitive, pressure-sensitive, optical, and the like. Optical touch technology is susceptible to light interference and distortion on curved surfaces. Capacitive touch technology is easily affected by substances such as sweat, and the distortion problem is difficult to resolve. Products using resistive touch technology are relatively expensive and are susceptible to scratching and damage. An acoustic wave-based technical solution is now proposed, which can identify a friction signal generated when a user slides on the surface of a device, thereby determining the user's sliding operation and implementing a touch control function.

## SUMMARY

One of the embodiments of the present disclosure provides a device for identifying a touch operation using friction signals, wherein at least part of a surface of the device serves as sliding regions, the sliding regions include a first sliding region and a second sliding region, the first sliding region and the second sliding region have different features, and the features are manifested in distinguishability of a friction signal generated by a finger sliding in the first sliding region and a friction signal generated by a finger sliding in the second sliding region in a time domain or a frequency domain.

One of the embodiments of the present disclosure further provides a device for identifying a touch operation using friction signals, wherein at least part of a surface of the device serves as sliding regions, the sliding regions include a first sliding region and a second sliding region, the first sliding region and the second sliding region have different features, and the features include material features, roughness features and surface structure features.

## BRIEF DESCRIPTION OF THE DRAWINGS

The present disclosure is further illustrated in terms of exemplary embodiments. These exemplary embodiments are described in detail with reference to the drawings. These embodiments are non-limiting exemplary embodiments, in which like reference numerals represent similar structures, and wherein:

FIG. 1 is a schematic diagram of an application scenario according to some embodiments of the present disclosure;
FIG. 2A is a schematic diagram of a headphone according to some embodiments of the present disclosure;
FIG. 2B is a result graph of friction signals according to some embodiments of the present disclosure;
FIG. 2C is a schematic diagram of an exemplary sliding region according to some embodiments of the present disclosure;
FIG. 2D is a result graph of friction signals according to some embodiments of the present disclosure;
FIG. 2E is a schematic diagram of an exemplary sliding region according to some embodiments of the present disclosure;
FIG. 2F is a schematic diagram illustrating geometric relationships of concentric circles formed by connecting vertices of an inclined tooth structure according to some embodiments of the present disclosure;
FIG. 2G is a frequency distribution graph of a friction signal generated by finger sliding in an inclined tooth structure according to some embodiments of the present disclosure;
FIG. 2H is a result graph of friction signals according to some embodiments of the present disclosure;
FIG. 2I and FIG. 2J are schematic diagrams of the structure of a micropillar according to some embodiments of the present disclosure;
FIG. 2k is a result graph of friction signals according to some embodiments of the present disclosure;
FIG. 2L is a result graph of friction signals according to some embodiments of the present disclosure;
FIG. 3A- FIG. 3C are schematic diagrams illustrating an exemplary first sliding region and an exemplary second sliding region having different surface roughness according to some embodiments of the present disclosure;
FIG. 4A- FIG. 4B are schematic diagrams of another exemplary first sliding region and another exemplary second sliding region having different surface roughness according to some embodiments of the present disclosure;
FIG. 5 is a schematic diagram of an exemplary fish-scale-like structure according to some embodiments of the present disclosure;
FIG. 6 is a schematic diagram of a structure of an inclined tooth structure according to some embodiments of the present disclosure;

FIG. 7A- FIG. 7C are schematic diagrams illustrating another exemplary first sliding region and another exemplary second sliding region having different surface structures according to some embodiments of the present disclosure;

FIG. 7D is a result graph of friction signals generated by different sliding directions according to some embodiments of the present disclosure;

FIG. 8 is a schematic flowchart illustrating a friction signal identification process according to some embodiments of the present disclosure.

## DETAILED DESCRIPTION

To more clearly illustrate the technical solutions related to the embodiments of the present disclosure, a brief introduction of the drawings referred to the description of the embodiments is provided below. Obviously, the drawings described below are only some examples or embodiments of the present disclosure. Those having ordinary skills in the art, without further creative efforts, may apply the present disclosure to other similar scenarios according to these drawings. Unless obviously obtained from the context or the context illustrates otherwise, the same numeral in the drawings refers to the same structure or operation.

It should be understood that "system," "device," "unit," and/or "module" as used herein is a manner used to distinguish different components, elements, parts, sections, or assemblies at different levels. However, if other words serve the same purpose, the words may be replaced by other expressions.

As shown in the present disclosure and claims, the words "one," "a," "a kind," and/or "the" are not especially singular but may include the plural unless the context expressly suggests otherwise. In general, the terms "comprise," "comprises," "comprising," "include," "includes," and/or "including" merely prompt to include operations and elements that have been clearly identified, and these operations and elements do not constitute an exclusive listing. The methods or devices may also include other operations or elements.

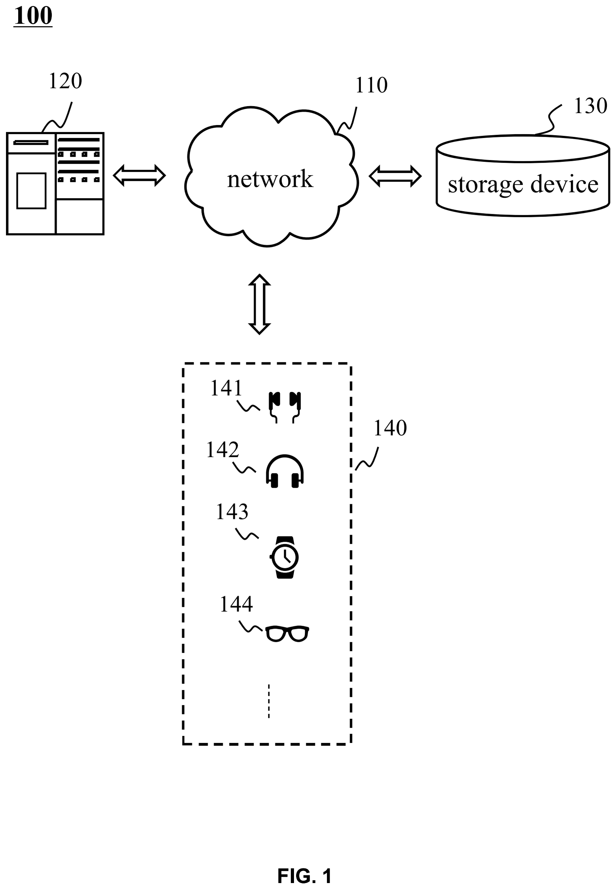

FIG. 1 is a schematic diagram of an application scenario according to some embodiments of the present disclosure.

The application scenario 100 may include a network 110, a processor 120, a storage device 130, and a terminal device 140. In some embodiments, a user performs a sliding operation on the surface of the terminal device 140 and the sliding operation causes the generation of a friction signal. The processor 120 identifies one or more friction signals generated by the sliding operation, thereby being able to identify an operation of user (e.g., identify a sliding direction, a sliding force, a sliding distance, etc.), and controls the terminal device 140 to perform a corresponding function (e.g., increase or decrease volume) based on the operation of user, thus implementing the touch control function of the terminal device 140. In some embodiments, the processor 120 may identify the one or more friction signals generated by the sliding operation to identify the sliding direction of the user, and control the terminal device 140 to increase or decrease the volume based on the sliding direction. In some embodiments, the processor 120 may identify the one or more friction signals generated by the sliding operation to identify the sliding force and/or the sliding distance of the user, and determine whether the sliding operation is an accidental touch based on the sliding force and/or the sliding distance. For example, when the sliding force and/or the sliding distance is not within a preset range (e.g., the sliding force and/or the sliding distance is too small or too large), the sliding operation may be caused by an accidental touch of the user, and there is no need to control the terminal device 140 to perform an operation. In some embodiments, in addition to controlling the operation of the terminal device 140 by identifying the one or more friction signals, the operation of the terminal device 140 may also be controlled by identifying other signal types, for example, a vibration signal. For example, a user taps on the surface of the terminal device 140, generating a vibration signal. The processor 120 identifies the vibration signal generated by the tapping operation (e.g., a count of taps, the frequency of taps, the force of taps), thereby being able to identify the operation of the user, and controls the terminal device 140 to perform a corresponding function (e.g., pause or resume audio playback) based on the operation of user, thus implementing the touch control function of the terminal device 140. In some embodiments, the processor 120 may be located inside the terminal device 140, or may be located outside the terminal device 140 and communicate with the terminal device 140 via a wired or wireless mean. For example, the one or more friction signals generated by the operation of the user on the surface of the terminal device 140 may be directly processed by a processing device within the terminal device 140, and a control instruction to control the terminal device 140 may be generated based on the operation of the user identified from the processing result.

In some embodiments, the processor 120 may be a single processor or a group of processors. The group of processors may be centralized or distributed (e.g., the processor 120 may be a distributed system). In some embodiments, the processor 120 may be local or remote. For example, the processor 120 may access information and/or data stored in the storage device 130 and the terminal device 140 via the network 110. As another example, the processor 120 may be directly connected to the storage device 130 and the terminal device 140 to access stored information and/or data. In some embodiments, the processor 120 may be implemented on a cloud platform. Merely by way of example, the cloud platform may include a private cloud, a public cloud, a hybrid cloud, a community cloud, a distributed cloud, an inter-cloud, a multi-cloud, etc., or any combination thereof.

The storage device 130 may store data and/or instructions related to the terminal device 140. For example, the storage device 130 may store training samples for a machine learning model (i.e., a plurality of friction signals generated by a plurality of sliding operations performed by a user). In some embodiments, the storage device 130 may include a mass storage, a removable storage, a volatile read-write memory, a read-only memory (ROM), etc., or any combination thereof. Exemplary mass storage may include magnetic disks, optical discs, solid-state disks, etc. Exemplary removable storage may include flash drives, floppy disks, optical discs, memory cards, compact discs, magnetic tapes, etc. Exemplary volatile read-only memory may include random-access memory (RAM). Exemplary RAM may include dynamic RAM (DRAM), double data rate synchronous dynamic RAM (DDR SDRAM), static RAM (SRAM), thyristor RAM (T-RAM), and zero-capacitor RAM (Z-RAM), etc. Exemplary ROM may include mask ROM (MROM), programmable ROM (PROM), erasable programmable ROM (EPROM), electronically erasable programmable ROM (EEPROM), compact disc ROM (CD-ROM), and digital versatile disc ROM, etc. In some embodiments, the storage device 130 may be implemented on a cloud platform.

In some embodiments, the storage device 130 may be connected to the network 110 to communicate with one or more components in the application scenario 100 (e.g., the processor 120, the terminal device 140). One or more components in the application scenario 100 may access data or instructions stored in the storage device 130 via the network 110. In some embodiments, the storage device 130 may be directly connected to or communicate with one or more components in the application scenario 100 (e.g., the processor 120, the terminal device 140, etc.). In some embodiments, the storage device 130 may be part of the processor 120.

The network 110 may connect the various components of the system and/or connect the system with external resource components. The network 110 enables communication among the various components and with other parts outside the system, facilitating the exchange of data and/or information. In some embodiments, the network 110 may be any one or more of a wired network or a wireless network. The processor 120 may obtain friction signal data from the terminal device 140 and/or the storage device 130 via the network 110.

The terminal device 140 may perform functions related to the operation of user. In some embodiments, the terminal device 140 may include earphones (e.g., an in-ear earphone 141, an open-fit earphone 142), a watch 143, glasses 144, a wristband, wearable clothing, a smart helmet, a VR/AR device, etc. Taking earphones as an example, a user performs a sliding operation on the surface of the earphone, and this sliding operation generates a friction signal. A microphone component in the earphone picks up the friction signal, and the processor 120 processes the friction signal (e.g., signal segmentation, signal pre-emphasis, feature extraction, etc.) to identify the sliding direction of user, thereby controlling the earphone to perform a corresponding function (e.g., increase or decrease the volume) based on the sliding direction of user, thus implementing the touch control function of the earphone.

The description of the application scenario 100 is intended to be illustrative and not to limit the scope of the present application. Many alternatives, modifications, and variations will be apparent to those of ordinary skill in the art. It should be understood that a person skilled in the art, after understanding the principles of this application, may modify the various components without departing from these principles, and these modifications are all within the protection scope of this disclosure.

In some embodiments, a part of the surface of the housing of the terminal device may serve as one or more sliding regions. For example, the surface of the housing of a sound production component of an earphone may serve as a sliding region. The user performs a sliding operation in the one or more sliding regions to generate one or more friction signals, is the one or more friction signals are picked up by an audio pickup component (e.g., a microphone). A processing device processes the one or more friction signals (e.g., friction signal segmentation, friction signal pre-emphasis, feature extraction, etc.) to identify the sliding direction, the sliding force, etc., thereby controlling the earphone to perform a corresponding function. Taking an identification of the sliding direction as an example, when a user's finger slides in one or more sliding regions, friction signals generated by different sliding directions (this friction signal refers to a signal obtained after being picked up by the audio pickup component and processed by the processing device) are different. Thus, a sliding direction may be identified based on a friction signal. For example, when the sliding directions are different, the corresponding generated friction signals have different acoustic features (e.g., the volume of a friction signal, frequency of the friction signal, count of peaks in the friction signal, discontinuity of the friction signal) in the time domain or the frequency domain. Thus, the sliding direction may be identified based on the acoustic features of the one or more friction signals in the time domain or the frequency domain. In some embodiments, when the structure and/or material of the one or more sliding regions that the user's finger slides across are substantially the same or have minor differences (and a propagation path of the friction signal and a position of the pickup component are substantially the same), there will be a certain difference between the acoustic features of the friction signals generated by different sliding directions. However, these differences between the acoustic features of the friction signals generated by different sliding directions may be relatively small, making it difficult for an algorithm to identify the sliding directions based on the difference in the acoustic features of the one or more friction signals, and the algorithms required may be overly complex. Furthermore, a very small difference in acoustic features may even make using an algorithm to identify the sliding direction impossible. Based on this, to further reduce the difficulty for the algorithm to identify the sliding direction, a design may be implemented at different levels, such as a generation, a propagation, and a collection of the friction signal, to increase the degree of difference in acoustic features between the friction signals generated by different sliding directions, thereby reducing the complexity of the algorithm. For example, from the perspective of friction signal generation, the one or more sliding regions may be designed with one or more specific features, such that the one or more sliding regions includes a plurality of sliding sub-regions, and different sliding sub-regions have different features (e.g., different materials, different structures, etc.), thereby increasing the degree of difference in the acoustic features of the friction signals. As another example, from the perspective of friction signal propagation, one or more acoustic materials may be arranged in the propagation path of the friction signals to increase the degree of difference in the acoustic features of the friction signals. As yet another example, from the perspective of friction signal collection, the position of the audio pickup component may be set to increase the degree of difference in the acoustic features of the friction signals. In some embodiments, two sliding regions may also be designed with specific features, so that the one or more friction signals generated by sliding operations in the two sliding regions may have large differences in different types of acoustic features, thereby allowing the sliding directions to be determined based on the different types of acoustic features of the one or more friction signals.

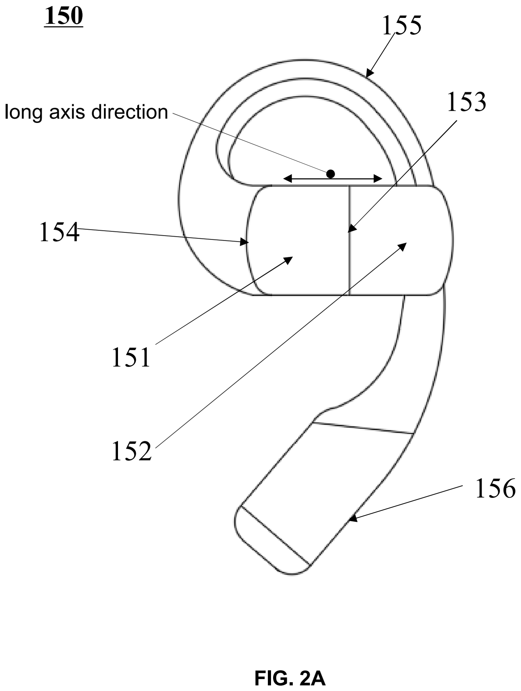

FIG. 2A is a schematic diagram illustrating an exemplary headphone according to some embodiments of the present disclosure. As shown in FIG. 2A, the earphone 150 may include a sound production component 154, an ear hook 155, and a body case 156. The sound production component 154 may be located near the ear and is used for sound transmission. The body case 156 is electrically connected to the sound production component 154, and the body case 156 may house a battery that provides electrical energy to the sound production component 154. The ear hook 155 is located between the sound production component 154 and the body case 156 and connected with the sound production component 154 and the body case 156. The ear hook 155 may be hung on the ear to place the sound production component 154 near the user's ear. In some embodiments, the sound production component 154 may include a core housing and an earphone core. The core housing is connected to one end of the ear hook 155 and is used to accommodate the earphone core. The earphone core is located in the internal space formed by the core housing. The earphone core may be used to convert an electrical signal into corresponding mechanical vibrations (i.e., "sound emission"). The body case 156 is connected to the other end of the ear hook 155 (the end away from the sound production component 154). In some alternative embodiments, the body case 156 may accommodate a circuit board, and the circuit board is electrically connected to the sound production component 154, and the circuit board may achieve control over the sound transmission of the sound production component 154. For example, the circuit board may be electrically connected to the earphone core of the sound production component 154 (e.g., via wires or a flexible printed circuit board) so that the circuit board may control the sound emission of the earphone core. In some alternative embodiments, the body case 156 may be omitted, and the battery may be located inside the core housing. In some embodiments, the earphone 150 may include a microphone. The microphone is an audio pickup component that may convert a friction signal (such as a sound signal) into an electrical signal. In some embodiments, the microphone may include a bone conduction microphone. The bone conduction microphone may convert a vibration signal into an electrical signal. For example, when a user's finger performs a sliding operation on the surface of the sound production component 154, the vibration signal is generated. The vibration signal may be transmitted to the bone conduction microphone through the housing structure, and the bone conduction microphone may collect the vibration signal and convert the vibration signal into an electrical signal. In some embodiments, the microphone may include an air conduction microphone. The air conduction microphone may convert an air-conducted friction signal into an electrical signal. For example, when a user's finger performs a sliding operation on the surface of the sound production component 154, the surface vibration of the sound production component 154 may cause the surrounding air to vibrate, generating the air-conducted friction signal. The air conduction microphone may collect the air-conducted friction signal and convert the air-conducted friction signal into an electrical signal.

In some embodiments, the outer surface of the core housing of the sound production component 154 of the earphone 150 may serve as a sliding region. The outer surface of the core housing of the sound production component 154 refers to the averted surface of the core housing from the ear when the earphone 150 is in a worn state. Using the outer surface of the core housing of the sound production component 154 as the sliding region can, on one hand, ensure that the sliding region has a sufficiently large sliding surface and is convenient for the user's sliding operation, and on the other hand, can maintain the wearing stability of the earphone during the sliding process. In some embodiments, to make the friction signals generated by different sliding directions have a relatively obvious degree of distinction, the one or more sliding regions may be divided into sliding sub-regions, and the divided sliding sub-regions may be designed with specific features, such that different sliding sub-regions have different structural or material designs, thereby increasing the difference in the acoustic features of the friction signals generated by sliding operations on different sliding sub-regions, and thus determining the sliding directions based on the different features of the friction signals.

In some embodiments, as shown in FIG. 2A, the one or more sliding regions may include an adjacent first sliding region 151 and second sliding region 152. The first sliding region 151 and the second sliding region 152 are provided on the outer surface of the core housing of the sound production component 154 of the earphone 150, and the user's finger may slide in the first sliding region 151 and the second sliding region 152.

In some embodiments, a certain position on the outer surface of the core housing of the sound production component 154 may be used as a transition region 153. The transition region 153 divides the outer surface into two regions, and a surface area beside the transition region 153 facing one end (a free end) of the sound production component 154 is the second sliding region 152, and a surface area beside the transition region 153 facing another end (a non-free end) of the sound production component 154 is the first sliding region 151. For example, as shown in FIG. 2A, the centerline of a long axis direction of the sound production component 154 may be used as the transition region 153. The transition region 153 may be a transition line (as shown in FIG. 2A) or a transition surface. In some embodiments, a sum of areas of the first sliding region 151 and the second sliding region 152 may be less than or equal to a surface area of the outer surface of the core housing of the sound production component 154 of the earphone 150. In some embodiments, the surface area of the outer surface of the core housing of the sound production component 154 may be a projected area of the sound production component 154 in the sagittal plane of the human body when the earphone 150 is in a worn state. For example, as shown in FIG. 2A, the sum of the areas of the first sliding region 151 and the second sliding region 152 may be equal to or approximately equal to the surface area of the outer surface of the core housing of the sound production component 154 (in this case, the entire outer surface of the core housing of the sound production component 154 serves as the sliding region). For example, in other embodiments, considering that an area exposed to the air or an area convenient for the user to touch when the earphone 150 is in a worn state may be smaller than the outer surface of the core housing of the sound production component 154 (this is because when the earphone 150 is in a worn state, the free end of the sound production component 154 may be blocked by the auricle), the sum of the areas of the first sliding region 151 and the second sliding region 152 may be set to be smaller than the surface area of the outer surface of the core housing of the sound production component 154. For example, the entire sliding region is away from the free end of the sound production component 154 (in this case, a part of the outer surface of the core housing of the sound production component 154 serves as the sliding region).

By setting the entire sliding region away from the free end of the sound production component 154, on one hand, it may be convenient for the user to perform a sliding operation on the entire sliding region; on the other hand, when the earphone 150 is in a worn state, it can be ensured that the user's finger can slide across the entire sliding region, avoiding the situation where the finger only slides in one sliding sub-region.

In some embodiments, the user's finger may slide from the first sliding region 151 to the second sliding region 152, or from the second sliding region 152 to the first sliding region 151. The direction of sliding from the second sliding region 152 to the first sliding region 151 may be recorded as a first direction, and the direction of sliding from the first sliding region 151 to the second sliding region 152 may be recorded as a second direction. In some embodiments, to ensure that the friction signals generated by different sliding directions have a relatively obvious degree of distinguishability in terms of acoustic features, the first sliding region 151 and the second sliding region 152 may be designed with specific features, such that the first sliding region 151 and the second sliding region 152 have different structural and/or material designs, thereby increasing the difference in the acoustic features of the friction signals generated by sliding in the two sliding directions. In some embodiments, when the first sliding region 151 and the second sliding region 152 have different features (for example, material features, roughness features, or surface structure features), the distinguishability of a friction signal generated by the finger sliding in the first sliding region 151 (also referred to as a first friction signal) and a friction signal generated by a finger sliding in the second sliding region 152 (also referred to as a second friction signal) is present. The distinguishability refers to a difference in acoustic features between the first friction signal and the second friction signal in the time domain or frequency domain. The acoustic features of the friction signal may include, but are not limited to, the amplitude of the friction signal, peak features (such as a peak count, a peak time distribution, or a peak intensity), discontinuity features, fundamental frequency, peak frequency, and the like. For more content regarding the distinguishability in the time domain or frequency domain of the friction signals generated by the finger sliding in different sliding regions, reference may be made to the relevant descriptions below.

For the purpose of illustration, to facilitate the comparison of friction signals corresponding to different sliding regions, the friction signals may be collected according to the following test manner: a simulated finger slides in the two sliding regions with the same condition parameters to generate corresponding friction signals. The condition parameters here may include pressing force, sliding speed, and sliding distance. For example, when collecting friction signals, a finger model made of silicone may be used to slide in the two sliding regions with the same pressing force, sliding speed, and sliding distance. When the features of the first sliding region 151 and the second sliding region 152 are completely identical, the first friction signal generated by the simulated finger sliding in the first sliding region 151 with the same condition parameters is substantially the same in the time domain or frequency domain as the second friction signal generated by the simulated finger sliding in the second sliding region 152 in terms of acoustic features. Conversely, when the first sliding region 151 and the second sliding region 152 have different features, the first friction signal generated by the simulated finger sliding in the first sliding region 151 with the same condition parameters has a clear difference from the second friction signal generated by the simulated finger sliding in the second sliding region 152 in the time domain or frequency domain, that is, distinguishability.

It should be noted that the first sliding region 151 and the second sliding region 152 described above are merely for illustrative purposes. In other embodiments, more sliding regions may also be provided to increase the distinguishability of the friction signals generated by sliding operations, or to identify more sliding directions. For example, the one or more sliding regions may also include a third sliding region, and the first sliding region 151, the second sliding region 152, and the third sliding region are arranged sequentially along the long axis direction of the sound production component 154. Under this arrangement, when the user's finger slides across the three sliding regions, the distinguishability of the friction signals generated by the sliding operation may be further increased. For example, when the one or more sliding regions includes two sliding sub-regions, the one or more friction signals generated by the sliding operation may have one characteristic abrupt change. For example, the friction signal changes abruptly when sliding to a junction of the two sliding sub-regions. When the one or more sliding regions includes three sliding sub-regions, a count of abrupt changes in the friction signal may be two, namely at a junction of the first sliding sub-region and the second sliding sub-region, and at a junction of the second sliding sub-region and the third sliding sub-region. As another example, the arrangement direction of the three sliding regions may be changed, such as arranging the three sliding regions along a direction perpendicular to the long axis of the sound production component 154, to achieve the identification of more sliding directions. In some embodiments, the user's finger may not only slide along the first direction or the second direction, but may also slide along more other directions, for example, along a third direction and a fourth direction perpendicular to the first direction. The arrangement of a plurality of sliding regions only needs to satisfy that the acoustic features of the friction signals generated when the user slides in the plurality of sliding regions may have a large difference, thereby allowing the sliding directions to be determined based on the acoustic features of the friction signals.

In some embodiments, the two sliding regions may be designed with specific features to increase the distinguishability of the friction signals generated by finger sliding in the two sliding regions in terms of acoustic features (e.g., the volume of the friction signal, the frequency of the friction signal, the count of peaks in the friction signal, the discontinuity of the friction signal), so that the sliding direction may be determined based on the difference in acoustic features. In some embodiments, the two sliding regions may be designed with specific features to increase the difference in the volume of the friction signals generated by the finger sliding in the two sliding regions, so that the sliding direction may be determined based on a volume level. In some embodiments, the two sliding regions may be designed with specific features such that the surface roughness, the material, the surface structure, porosity, etc., of the two sliding regions are different, thereby achieving a significant difference in the volume of the friction signals generated by the finger sliding in the two sliding regions. In this case, the distinguishability is manifested in that the first friction signal generated by the finger sliding in the first sliding region 151 and the second friction signal generated by the finger sliding in the second sliding region 152 have a difference in volume (also referred to as a difference in amplitude). In other words, when features such as surface roughness, material, surface structure, or porosity of the two sliding regions are set to be different, the first friction signal generated by the finger sliding in the first sliding region 151 and the second friction signal generated by the finger sliding in the second sliding region 152 have at least a difference in amplitude in the time domain. In some embodiments, the aforementioned amplitude difference may be understood as the difference in amplitude between the first friction signal and the second friction signal being not less than 20% of the amplitude of either the first friction signal or the second friction signal.

In some embodiments, the feature design of the one or more sliding regions may include material design. In some embodiments, the first sliding region 151 and the second sliding region 152 may use different materials. The one or more friction signals generated by the finger sliding in the one or more sliding regions with different material designs may have a large difference in volume. That is, when the material features of the two sliding regions are set to be different, the first friction signal generated by the finger sliding in the first sliding region 151 and the second friction signal generated by the finger sliding in the second sliding region 152 have at least a difference in amplitude in the time domain. In some embodiments, the material of the one or more sliding regions may include, but is not limited to, rubber, silicone, plastic, metal (or metal alloy), etc. In some embodiments, the plastic may include, but is not limited to, high-molecular-weight polyethylene, blow-molded nylon, engineering plastics, etc., or any combination thereof. The rubber may refer to other single or composite materials that may achieve the same performance, and may include, but is not limited to, general-purpose rubber and special-purpose rubber. In some embodiments, general-purpose rubber may include, but is not limited to, natural rubber, isoprene rubber, styrene-butadiene rubber, butadiene rubber, neoprene rubber, etc., or any combination thereof. In some embodiments, special-purpose rubber may include, but is not limited to, nitrile rubber, silicone rubber, fluoro-rubber, polysulfide rubber, polyurethane rubber, chlorohydrin rubber, acrylate rubber, epichlorohydrin rubber, etc., or any combination thereof. In some embodiments, the composite materials may include, but are not limited to, reinforcing materials such as glass fiber, carbon fiber, boron fiber, graphite fiber, fiber, graphene fiber, silicon carbide fiber, or aramid fiber. In some embodiments, to increase the difference in the volume of the friction signals generated by the finger sliding in the first sliding region 151 and the second sliding region 152, the first sliding region 151 and the second sliding region 152 may be made of different materials. For example, the first sliding region 151 may be silicone, and the second sliding region 152 may be plastic. For another example, the first sliding region 151 may be silicone, and the second sliding region 152 may be aluminum metal. As yet another example, the first sliding region 151 may be rubber, and the second sliding region 152 may be an aluminum alloy.

In some embodiments, different materials have different parameters. Parameters of a material may include, but are not limited to, hardness, elastic modulus, plasticity, toughness, etc. In some embodiments, to increase the difference in the volume of the friction signals generated by the finger sliding in the first sliding region 151 and the second sliding region 152, at least one of the parameters of the materials of the first sliding region 151 and the second sliding region 152 is different. In some embodiments, the elastic moduli of the materials of the first sliding region 151 and the second sliding region 152 may be different. For example, the materials of the first sliding region 151 and the second sliding region 152 may be a flexible material and a rigid material, respectively. The elastic modulus of the flexible material ranges from 7.8 MPa to 1.2 GPa. The elastic modulus of the rigid material ranges from 2.2 GPa to 150 GPa. As another example, the material of the first sliding region 151 may be the rubber, and the material of the second sliding region 152 may be the plastic. In some embodiments, the hardnesses of the materials of the first sliding region 151 and the second sliding region 152 may be different. The difference between the Shore hardness of the material of the first sliding region 151 and the Shore hardness of the material of the second sliding region 152 is within a range of 42HD-86HD. As an example, the material of the first sliding region 151 may be a hard plastic, and the material of the second sliding region 152 may be the rubber. It should be noted that the first sliding region 151 and the second sliding region 152 may be made of different materials or the same material with different parameters, as long as it is ensured that the volume of the friction signals generated by the finger sliding in the first sliding region 151 and the second sliding region 152 has a large enough difference to determine the sliding direction. The present disclosure does not specifically limit the combination of materials or the parameters of the materials.

In some embodiments, the feature design of the one or more sliding regions may include roughness design. In some embodiments, the first sliding region 151 and the second sliding region 152 may have different roughness. When the roughness features of the two sliding regions are set to be different, the first friction signal generated by the finger sliding in the first sliding region 151 and the second friction signal generated by the finger sliding in the second sliding region 152 have at least a difference in amplitude in the time domain. The roughness may be used to characterize the degree of smoothness or roughness of a sliding region. The smaller the roughness, the smoother the sliding region; the larger the roughness, the rougher the sliding region. The volume of the one or more frictions signal generated by finger sliding in one or more sliding regions with different roughness is different, thus the sliding direction may be determined based on the volume of the friction signal generated by the sliding operation.

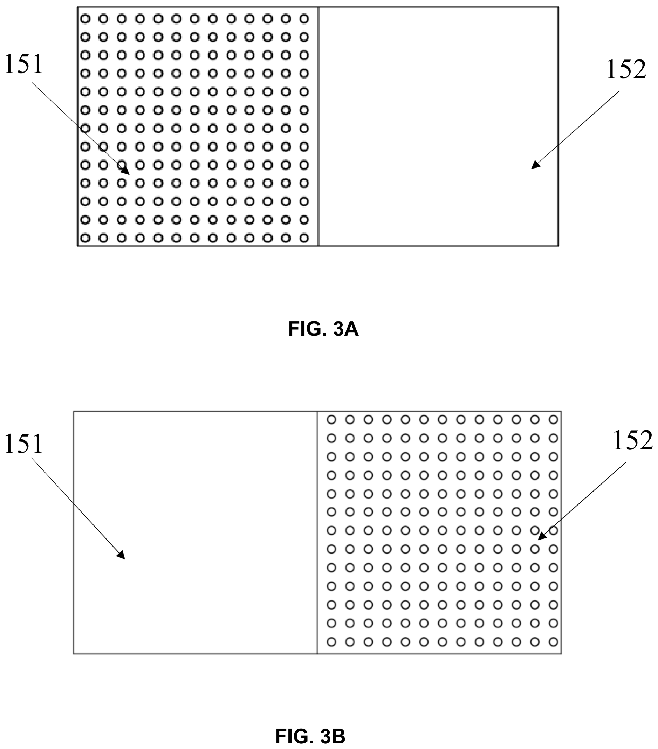

In some embodiments, the roughness may be characterized by one or more parameters of particles. The parameters of the particles may include, but are not limited to, a particle shape, a particle size, a particle count, and a particle spacing. FIG. 3A- FIG. 3C are schematic diagrams illustrating an exemplary first sliding region and an exemplary second sliding region having different surface roughnesses according to some embodiments of the present disclosure. In some embodiments, the roughness may be formed by processing particles on the one or more sliding regions. In some embodiments, as shown in FIG. 3A, a plurality of particles may be arranged on the first sliding region 151, and the first sliding region 151 is a rough surface; no particles are arranged on the second sliding region 152, and the second sliding region 152 is a smooth surface. In some embodiments, the parameters of the particles on the first sliding region 151 may determine the magnitude of the roughness of the first sliding region 151. It should be understood that the parameters of the particles are related to the size of the sound production component and ergonomics. For illustrative purposes only, the size of the area of the outer surface of the sound production component where the particles may be arranged is about 12mm*24mm, and a size of a contact area between the finger pulp and the earphone during sliding (i.e., the sliding region) is about 14mm*14mm. To increase the difference in the volume of the friction signals generated by the finger sliding in the two sliding regions, the shape of the particles on the first sliding region 151 may be hemispherical, the diameter of the particles may be 0.1mm~2mm, and the particle spacing may be 0.2mm~4mm. In some embodiments, as shown in FIG. 3B, no particles are arranged on the first sliding region 151, and the first sliding region 151 a smooth surface; a plurality of particles are arranged on the second sliding region 152, and the second sliding region 152 is a rough surface. The shape of the particles on the second sliding region 152 is spherical, the diameter of the particles is 0.1mm~2mm, and the particle spacing is 0.2mm~4mm.

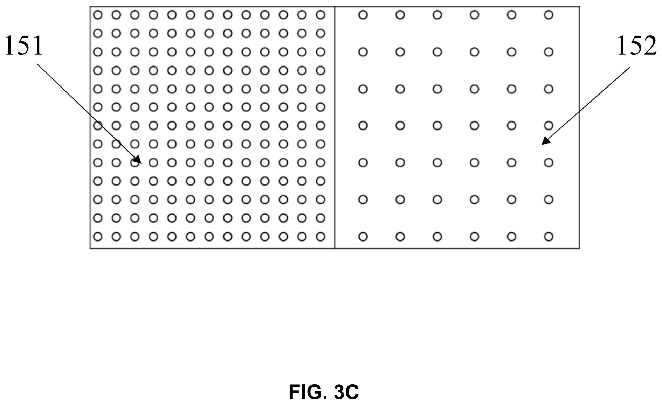

In some embodiments, as shown in FIG. 3C, d both the first sliding region 151 and the second sliding region 152 may be arranged particles, but the particles on the two sliding regions have different parameters. For example, as shown in FIG. 3C, the particles on the two sliding regions have the same particle shape and particle size, but have different particle count and particle spacing. The difference in the particle count and the particle spacing of the particles may cause a large difference in the friction signals generated by finger sliding in the two sliding regions. In other embodiments, the particles of the two sliding regions have the same particle shape, different particle sizes, different particle counts, and different particle spacings; or the particles of the two sliding regions have different particle shapes, the same particle size, the same particle count, and particle spacing; or the particle shape, particle size, particle count, and particle spacing of the particles on the two sliding regions are all different.

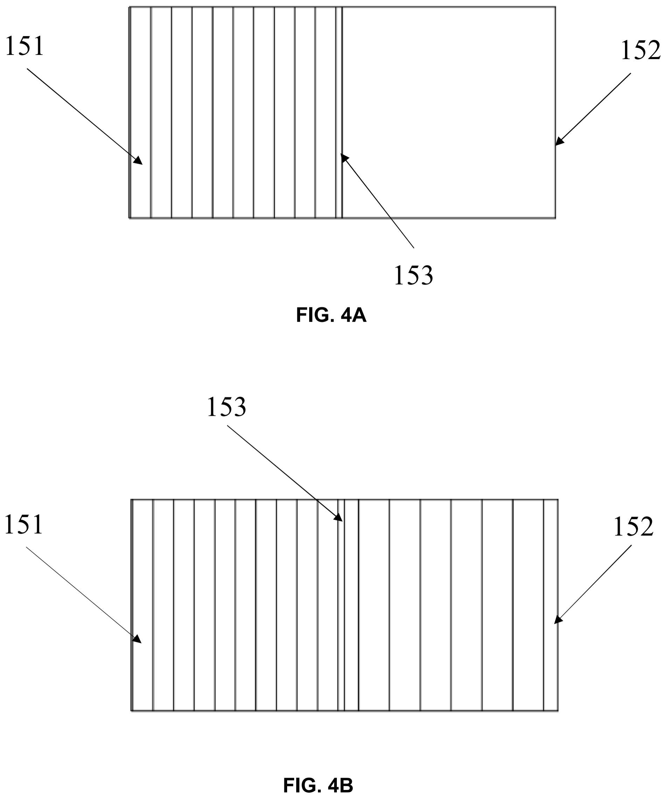

FIG. 4A- FIG. 4B are schematic diagrams of another exemplary first sliding region and another exemplary second sliding region having different surface roughnesses according to some embodiments of the present disclosure. In some embodiments, the sliding regions may have different roughnesses by processing stripes on the sliding regions. In some embodiments, the stripe width, the stripe height, and the stripe spacing of the stripes may determine the roughness of the sliding region. The stripe width refers to the length of a stripe along the direction of stripe arrangement. The stripe height refers to the length that a stripe protrudes from the surface of the sliding region. The stripe spacing refers to a distance between two adjacent stripes. In some embodiments, as shown in FIG. 4A, a plurality of stripes may be arranged on the first sliding region 151, and the first sliding region 151 is a rough surface; no stripes are arranged on the second sliding region 152, and the second sliding region 152 is a smooth surface. It should be understood that the parameters of the stripes are related to the size of the sound production component and ergonomics. For illustrative purposes only, the size of the area on the outer surface of the sound production component where stripes may be arranged is about 12mm*24mm, and the size of the contact area between the finger pulp and the earphone during sliding (i.e., the sliding region) is about 14mm*14mm. To increase the difference in the volume of the friction signals generated by the finger sliding in the two sliding regions, the stripe width of the stripes on the first sliding region 151 may be 0.5mm~5mm, the stripe height of the stripes may be 0.1mm~2mm, and the stripe spacing of the stripes may be 0.2mm~8mm. In some embodiments, as shown in FIG. 4B, the plurality of stripes may be arranged on both the first sliding region 151 and the second sliding region 152, but the stripes on the two sliding regions have different parameters. For example, the stripes on the two sliding regions have the same stripe width and stripe height, but have different stripe spacings. As another example, the stripes on the two sliding regions have different stripe widths, the same stripe height, and different stripe spacings. As yet another example, the stripes on the two sliding regions have different stripe widths, stripe heights, and stripe spacings. It should be noted that the particle roughness design shown in FIG. 3A-FIG. 3C and the stripe roughness design shown in FIG. 4A-FIG. 4B may be used in combination.

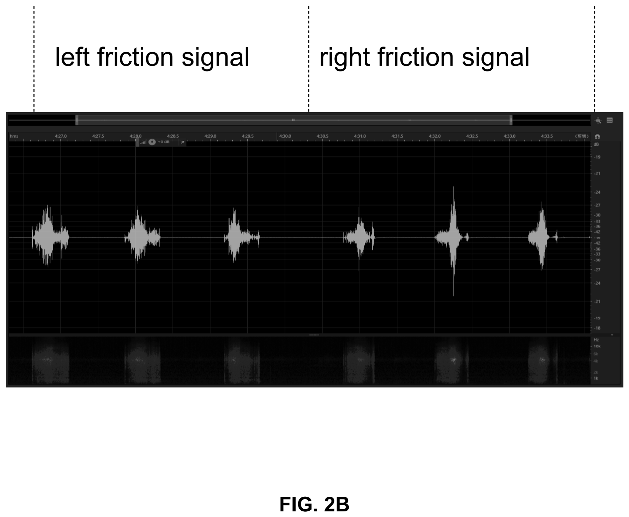

For a specific example, the first sliding region 151 may be a smooth surface (e.g., silicone, resin), and the second sliding region 152 may be a frosted surface. The volume of the friction signal generated by the finger sliding in the frosted surface is usually higher than the volume of the friction signal generated by the finger sliding in the smooth surface (it should be understood that the sliding force of the finger is substantially the same when the finger sliding in the frosted surface and the smooth surface). Thus, the sliding direction may be determined based on the volume of the friction signal generated by the sliding operation. For example, if the volume of the friction signal generated by the sliding operation is first small and then large, it may be determined that the user's finger is sliding from the smooth surface to the frosted surface (i.e., sliding from the first sliding region 151 to the second sliding region 152); if the volume of the friction signal generated by the sliding operation is first large and then small, it may be determined that the user's finger is sliding from the frosted surface to the smooth surface (i.e., sliding from the second sliding region 152 to the first sliding region 151). In some embodiments, to ensure that the volume of the friction signals generated on the frosted surface and the smooth surface has a large degree of difference, the difference in a kinetic friction coefficient between the frosted surface and the smooth surface may be greater than 0.3. FIG. 2B is a result graph of the friction signals according to some embodiments of the present disclosure. The left friction signal in FIG. 2B represents the friction signal generated on a smooth surface, and the right friction signal represents the friction signal generated on a frosted surface. It may be seen from FIG. 2B that the amplitude (i.e., the volume) of the right friction signal is greater than the amplitude of the left friction signal.

In some embodiments, the feature design of the one or more sliding regions may include surface structure features. In some embodiments, the first sliding region 151 and the second sliding region 152 may have different surface structures. When the surface structure features of the two sliding regions are set to be different, the first friction signal generated by the finger sliding in the first sliding region 151 and the second friction signal generated by the finger sliding in the second sliding region 152 have at least a difference in amplitude in the time domain. The surface structure may refer to a special structure on the surface of the one or more sliding regions. In some embodiments, the surface structure may include a planar structure and a gradient structure. The gradient structure has a certain slope (greater than zero). When the slopes of the gradient structures are different, the volumes of the one or more friction signals generated by the sliding operation may have a large difference. It should be understood that the slope of the planar structure is zero. In some embodiments, the gradient structure may include, but is not limited to, a fish-scale-like structure and an inclined tooth structure.

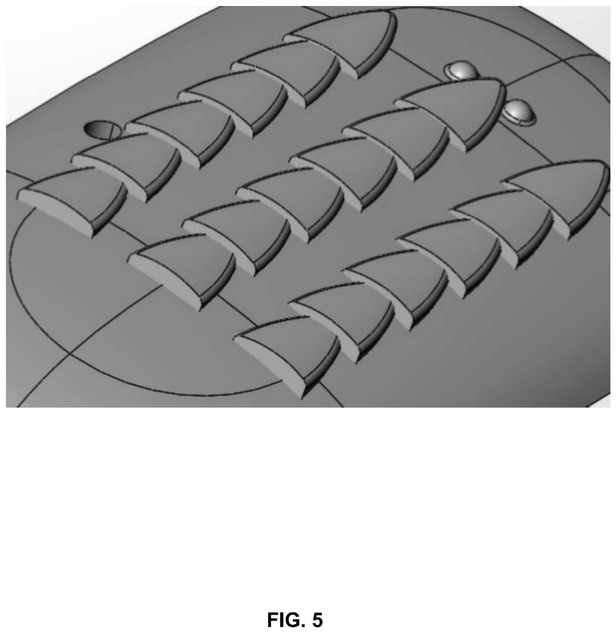

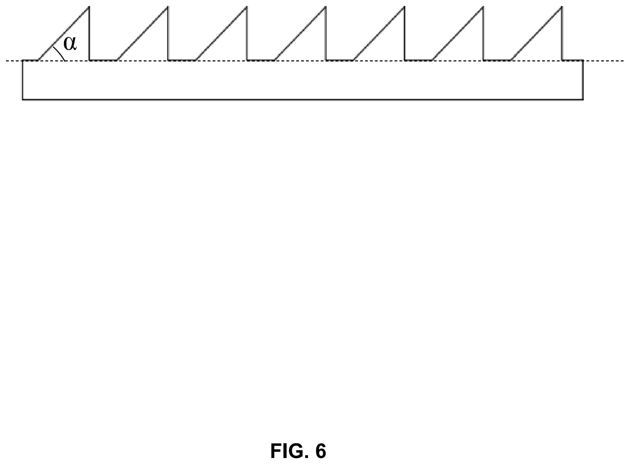

FIG. 5 is a schematic diagram of an exemplary fish-scale-like structure according to some embodiments of the present disclosure. FIG. 6 is a schematic diagram of an exemplary inclined tooth structure according to some embodiments of the present disclosure. As shown in FIG. 5, a plurality of scale-like structures are arranged obliquely in the same direction to form the fish-scale-like structure. As shown in FIG. 6, a plurality of triangular convexes are arranged in an array to form the inclined tooth structure. In some embodiments, adjacent triangular convexes may be arranged at intervals (as shown in FIG. 6), or may be arranged without intervals. In some embodiments, the shape of the convexs is not limited to the triangle shown in FIG. 6, but may also be other geometric shapes, for example, regular and/or irregular shapes such as pentagon, quadrilateral, etc. In some embodiments, the gradient structure (e.g., the fish-scale-like structure, the inclined tooth structure) may have a slope. For example, when the convex is a triangle, the slope of the inclined tooth structure may be the tangent value of angle $\alpha$. When sliding in one or more sliding regions with gradient structures of different slopes, the generated one or more friction signals have a large difference in volume. By setting the slope of the gradient structure, the volume of the one or more friction signals generated by the finger sliding in the one or more sliding regions with the gradient structure of that slope may be adjusted, thereby increasing the distinguishability of the volume of the friction signals generated by the finger sliding in the two sliding regions.

In some embodiments, different surface structures may be set on the two sliding regions to increase the difference in the volume of the friction signals generated by the finger sliding in the two sliding regions. For example, the surface structure arranged on the first sliding region 151 is a planar structure, and the surface structure arranged on the second sliding region 152 is an inclined tooth structure. As another example, the surface structures arranged on both the first sliding region 151 and the second sliding region 152 are the inclined tooth structures, but the slopes of the two inclined tooth structures are different. In other embodiments, the orientation of the gradient structures may also be set to increase the difference in the volume of the friction signals generated by the finger sliding in the two sliding regions. For example, the surface structures arranged on both sliding regions are the fish-scale-like structures, but the orientations of the fish-scale-like structures are different.

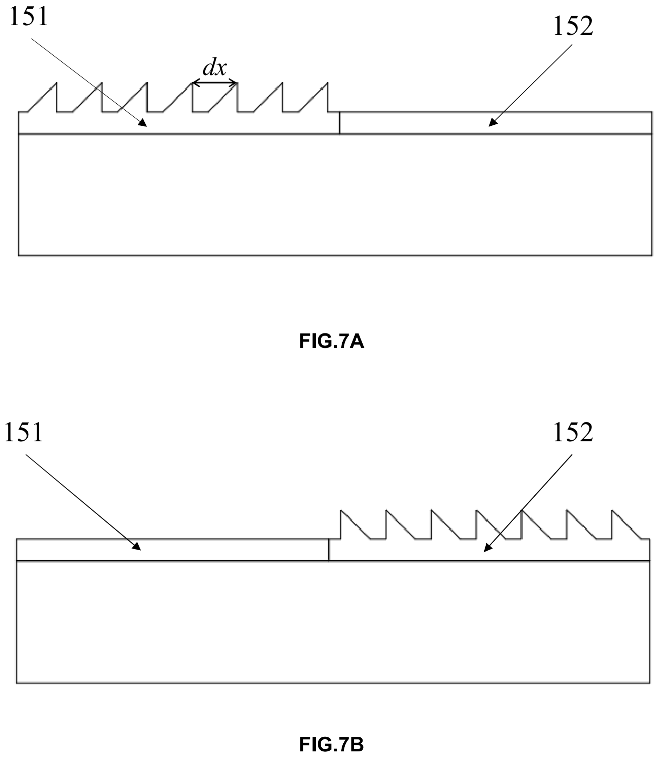

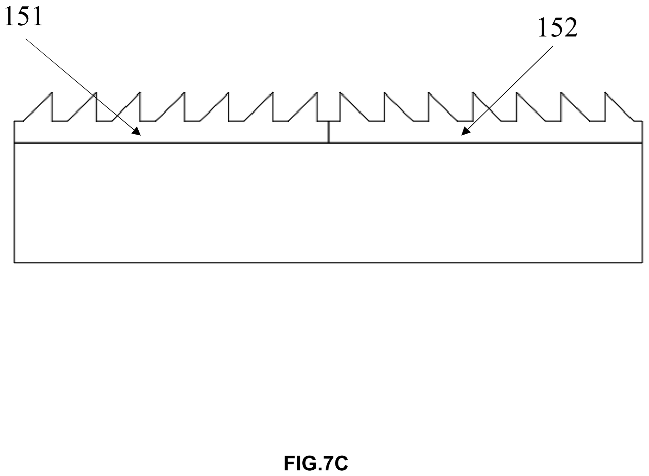

FIG. 7A- FIG. 7C are schematic diagrams illustrating another exemplary first sliding region and another exemplary second sliding region having different surface structures according to some embodiments of the present disclosure. In some embodiments, as shown in FIG. 7A, the surface structure arranged on the first sliding region 151 is the inclined tooth structure, and the surface structure arranged on the second sliding region 152 is the planar structure. In some embodiments, as shown in FIG. 7B, the surface structure arranged on the first sliding region 151 is the planar structure, and the surface structure arranged on the second sliding region 152 is the inclined tooth structure. In some embodiments, the surface structures arranged on both the first sliding region 151 and the second sliding region 152 are the inclined tooth structures, and the slopes of the inclined tooth structures are the same, but the orientations of the inclined tooth structures are different. It should be noted that the planar structure and the gradient structure are only exemplary structures of the surface structure. In other alternative embodiments, the surface structure may include any protruding structures arranged on the surface of one or more sliding regions. The protruding structure may refer to a geometric structure that protrudes from the surface of the one or more sliding regions. For example, protruding particles arranged on the surface of the one or more sliding regions may serve as the surface structure of the one or more sliding regions. Moreover, the embodiments of the present disclosure do not specifically limit the count of protruding structures.

In some embodiments, the designs of the material, the roughness, and the surface structure of the first sliding region 151 and the second sliding region 152 may be arbitrarily combined to achieve a higher degree of distinguishability in the volume of the friction signals generated by finger sliding in the two sliding regions, thereby improving the accuracy of sliding direction judgment. In some embodiments, in the design of the material, the roughness, and the surface structure of the first sliding region 151 and the second sliding region 152, one feature design may be the same, while the other two feature designs are different. In some embodiments, the materials on the first sliding region 151 and the second sliding region 152 may be the same, while the roughness and the surface structure are different. For example, the materials on both the first sliding region 151 and the second sliding region 152 are silicone; the particles are arranged on the first sliding region 151, making the first sliding region 151 a rough surface, and no particles are arranged on the second sliding region 152, making the second sliding region 152 a smooth surface; the surface structure arranged on the first sliding region 151 is a fish-scale-like structure, and the surface structure arranged on the second sliding region 152 is a planar structure. In other embodiments, the roughness of the first sliding region 151 and the second sliding region 152 may be the same, while the material and the surface structure of the first sliding region 151 and the second sliding region 152 are different; or, the surface structure arranged on the first sliding region 151 and the second sliding region 152 may be the same, while the material and the roughness of the first sliding region 151 and the second sliding region 152 are different. In some embodiments, the material, the roughness, and the surface structure designs of the first sliding region 151 and the second sliding region 152 may all be different. For example, the material of the first sliding region 151 is silicone, and the material of the second sliding region 152 is plastic; no particles are arranged on the first sliding region 151, making the first sliding region 151 a smooth surface, and the particles are arranged on the second sliding region 152, making the second sliding region 152 a rough surface; the surface structure arranged on the first sliding region 151 is the planar structure, and the surface structure arranged on the second sliding region 152 is the inclined tooth structure.

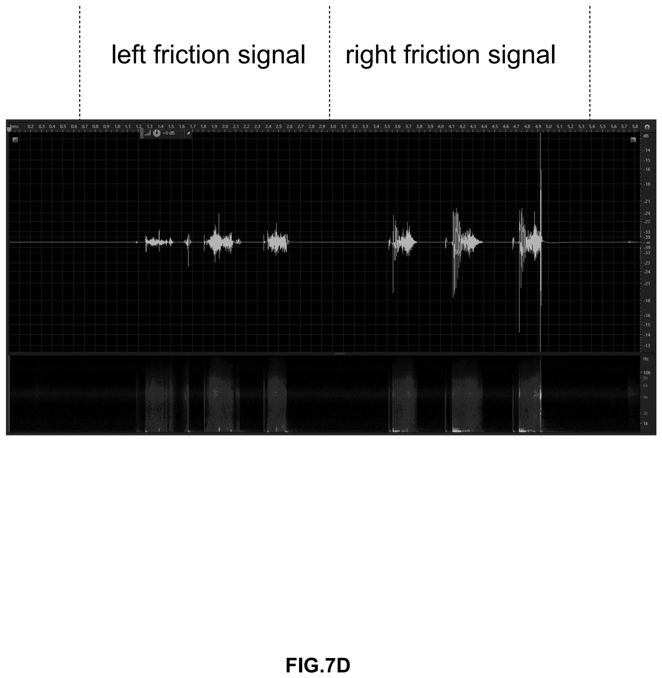

FIG. 7D is a result graph of friction signals generated by different sliding directions according to some embodiments of the present disclosure. In FIG. 7D, the material, the roughness, and the surface structure of the first sliding region 151 and the second sliding region 152 are all different. The friction signals on the left and right sides of FIG. 7D are the measured friction signals generated by finger sliding in a first direction (from the second sliding region to the first sliding region) and in a second direction (from the first sliding region to the second sliding region), respectively. Comparing the left and right friction signals in FIG. 7D, the volume of the left friction signal is significantly lower than the volume of the right friction signal. Thus, the sliding direction may be determined by the magnitude of the volume of the friction signal.

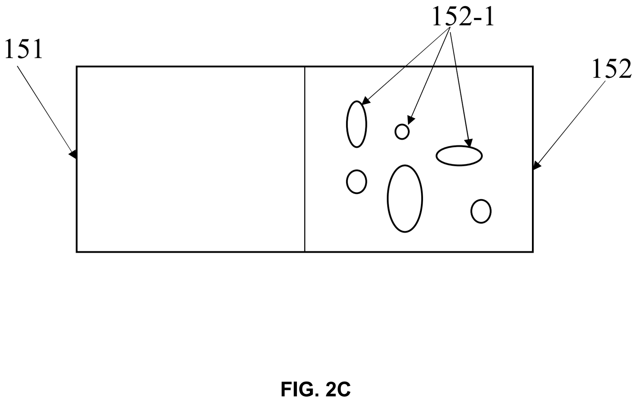

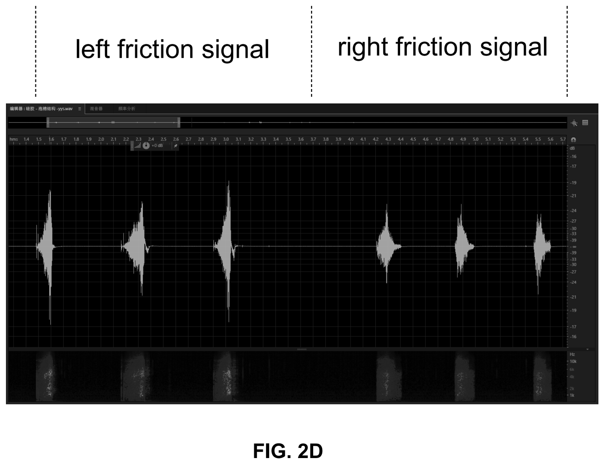

In some embodiments, other feature designs may be applied to the two sliding regions, such as setting different porosities for the two sliding regions, different contact areas between the finger and the two sliding regions during sliding, etc. Taking the porosity as an example, the first sliding region 151 and the second sliding region 152 may have different porosities. Pores on the surface of the one or more sliding regions may increase the amplitude of the friction signal. When the porosities of the two sliding regions are set to be different, the first friction signal generated by the finger sliding in the first sliding region 151 and the second friction signal generated by the finger sliding in the second sliding region 152 have at least a difference in amplitude in the time domain. FIG. 2C is a schematic diagram of an exemplary sliding region according to some embodiments of the present disclosure. As shown in FIG. 2C, the surface of the first sliding region 151 may be a smooth surface (i.e., no pores are provided), while the surface of the second sliding region 152 is provided with a plurality of pores 152-1. Compared to the friction signal generated by finger sliding in the first sliding region 151, the pores 152-1 may cause the friction signal generated by finger sliding in the second sliding region 152 to have a larger amplitude. FIG. 2D is a result graph of friction signals according to some embodiments of the present disclosure. Left friction signal in FIG. 2D represents the friction signal generated by the finger sliding in the second sliding region 152 (with pores), and right friction signal represents the friction signal generated by the finger sliding in the first sliding region 151 (without pores). It may be seen from FIG. 2D that the amplitude (i.e., the volume) of the right friction signal is smaller than the amplitude of the left friction signal.

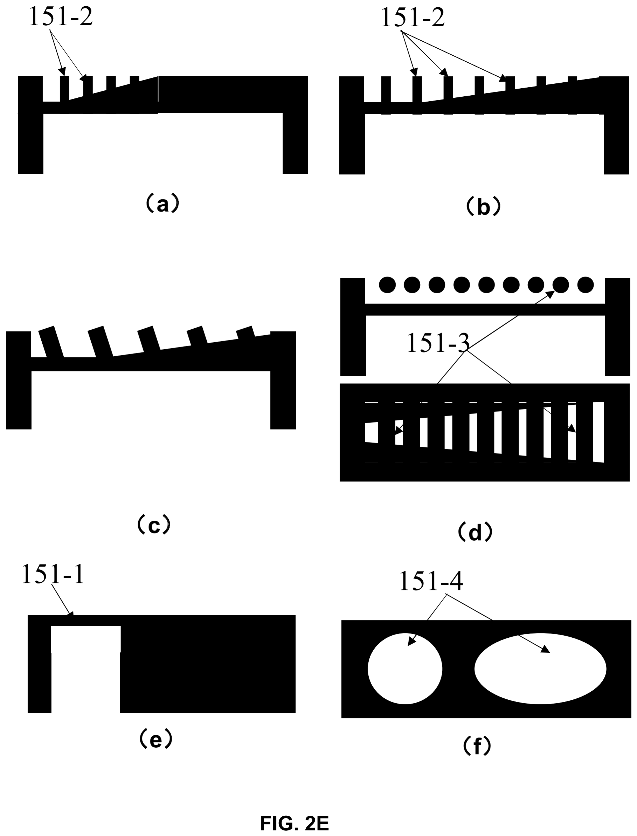

In some embodiments, the two sliding regions may be designed with specific features to increase the degree of difference in frequency of the friction signals generated by finger sliding in the two sliding regions, so that the sliding direction may be determined based on the frequency difference. In some embodiments, the one or more sliding regions may be designed with specific features to give the two sliding regions different natural resonant frequencies, thereby increasing the distinguishability of the frequency features of the friction signals generated by the finger sliding in the two sliding regions. In this case, the distinguishability is manifested in that the first friction signal generated by the finger sliding in the first sliding region 151 and the second friction signal generated by the finger sliding in the second sliding region 152 have a difference in frequency features. That is, when the two sliding regions are set to have different natural resonant frequencies, the first friction signal generated by the finger sliding in the first sliding region 151 and the second friction signal generated by the finger sliding in the second sliding region 152 have at least a difference in the frequency domain. In some embodiments,, one or more structures such as a wave plate, a chord, a beam, a membrane, a cavity (e.g., a Helmholtz resonance cavity), etc., may be arranged on one of the sliding regions, while the other sliding region is not provided with the above structures; or, structures such as a wave plate, a chord, a beam, a membrane, a cavity, etc., with different parameters (e.g., different length/width/thickness) may be arranged on the two sliding regions. In some embodiments, the wave plates of different lengths may be arranged on at least one of the one or more sliding regions. The friction signals generated by finger sliding over the wave plates of different lengths have a relatively obvious difference in frequency. Thus, the sliding direction may be determined based on the frequency difference of the friction signals. For example, FIG. 2E is a schematic diagram illustrating another exemplary sliding regions according to some embodiments of the present disclosure. As shown in (a) of FIG. 2E, a plurality of wave plates 151-2 with different lengths may be arranged on one sliding region, while no wave plates are arranged on the other sliding region. As shown in (b) of FIG. 2E, a plurality of wave plates 151-2 with different lengths may be arranged on both the sliding regions. The length of a wave plate 151-2 refers to the projected dimension of the wave plate in a direction perpendicular to the surface of the one or more sliding regions. In some embodiments, as shown in (a) and (b) of FIG. 2E, the wave plates 151-2 may be arranged vertically (i.e., perpendicular to the surface of the one or more sliding regions). In other embodiments, the wave plates 151-2 may also be arranged obliquely, as shown in (c) of FIG. 2E. In some embodiments, similar to the arrangement of the wave plates, the chords of different lengths may also be arranged on at least one of the one or more sliding regions, and the friction signals generated by the finger sliding over the chords of different lengths have a relatively obvious difference in frequency. For example, as shown in (d) of FIG. 2E, both the sliding regions may be provided with a plurality of chords 151-3 with different lengths. It should be understood that in other embodiments, the plurality of chords with different lengths may be arranged on one sliding region, while no chords are arranged on the other sliding region. The length of a chord 151-3 refers to the extension dimension of the chord in a direction parallel to the surface of the one or more sliding regions. In some embodiments, the membranes or the cavities of different sizes may be formed on at least one of the one or more sliding regions, and the friction signals generated by finger sliding over the membranes or the cavities of different sizes have a relatively obvious difference in frequency. For example, as shown in (e) of FIG. 2E, a membrane 151-1 may be formed by hollowing out the area under one sliding region, while the other sliding region is not modified. As another example, as shown in (f) of FIG. 2E, cavities 151-4 of different sizes (e.g., volume of the cavities) may be formed under the two sliding regions (under the sliding regions refers to the direction from the sliding region toward the interior of the sound production component). The shape of the cavity 151-4 may be circular or elliptical as shown in FIG. 2E(f). In other embodiments, it may also be other shapes, such as square, triangular, pentagonal, and other regular and/or irregular geometric shapes. In some embodiments, different structures (the wave plates, the chords, the membranes, the cavities, etc.) may also be arbitrarily combined (i.e., different types of structures are arranged on the two sliding regions, respectively) to make the frequency of the friction signals generated by the sliding operation have a relatively obvious difference.

In some embodiments, a microstructure (e.g., a spring sheet) may be arranged on one sliding sub-region. When a finger slides to that sliding sub-region, the microstructure may vibrate continuously, generating one or more frictions signal with rapidly jittering frequency and small amplitude for a certain period of time (a friction signal with rapidly jittering frequency and small amplitude may be recorded as a specific friction signal). Thus, the sliding direction may be identified by the specific friction signal generated by the microstructure. For example, the microstructure may be arranged on the first sliding region 151. When the sliding direction is different, the time of occurrence of the specific friction signal is different. For example, when the user's finger slides from the second sliding region 152 to the first sliding region 151, the specific friction signal appears later; when the user's finger slides from the first sliding region 151 to the second sliding region 152, the specific friction signal appears earlier. Thus, the sliding direction may be identified based on the time of generation of the specific friction signal.

In some embodiments, the material design, the roughness design, and/or the surface structure design may also be applied to the two sliding regions to make the frequency of the friction signals generated by the sliding operation have a relatively obvious difference, so that the sliding direction may be determined based on the frequency difference of the friction signals. In some embodiments, when the two sliding regions are set to have different material features (or roughness features, surface structure features), the first friction signal generated by the finger sliding in the first sliding region 151 and the second friction signal generated by the finger sliding in the second sliding region 152 have at least distinguishability in the frequency domain. The distinguishability is manifested in that a proportion of signal components within a specific frequency or a specific frequency range in the first friction signal is different from a proportion of signal components within the specific frequency or the specific frequency range in the second friction signal. Taking material design as an example, the proportion of low-frequency components in the friction signals generated by finger sliding in one or more sliding regions having materials with different hardness is different. For example, the proportion of the low-frequency components in the friction signal generated by a finger sliding in a soft material sliding region is greater than the proportion of low-frequency components in the friction signal generated by a finger sliding in a harder material sliding region.

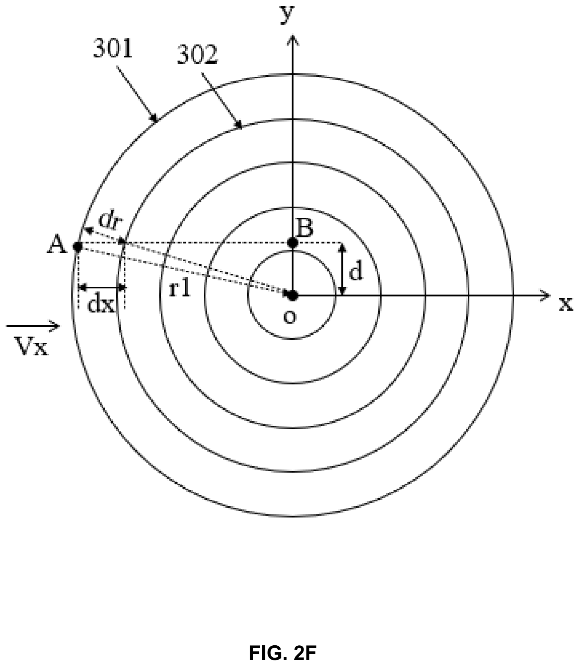

In some embodiments, when the two sliding regions are set to have different surface structure features (or roughness features, material features), the first friction signal generated by the finger sliding in the first sliding region 151 and the second friction signal generated by the finger sliding in the second sliding region 152 have at least distinguishability in the frequency domain. The distinguishability is manifested in that the fundamental frequency of the first friction signal is different from the fundamental frequency of the second friction signal. In some embodiments, the fundamental frequency refers to the lowest frequency in the friction signal. Taking the inclined tooth structure in the surface structure design (e.g., as shown in FIG. 7A) as an example, FIG. 2F is a schematic diagram of geometric relationships of concentric circles formed by connecting vertices of an inclined tooth structure according to some embodiments of the present disclosure. For ease of description, the concentric circles may be placed in an xoy coordinate system. A distance between two adjacent teeth in the inclined tooth structure is defined as $dx$, the radius of the concentric circle 301 is r1, and the difference in radius between two adjacent concentric circles (concentric circle 301 and concentric circle 302) is *dr.* A perpendicular line is drawn from point A on the concentric circle 301 to the y-axis, intersecting the y-axis at point B. A distance between the line segment oB is d. At this time, equation (1) may be obtained based on the geometric relationship:

$$dx = \sqrt{r_1^2 - d^2} - \sqrt{(r_1 - d_r)^2 - d^2}. \ (1)$$

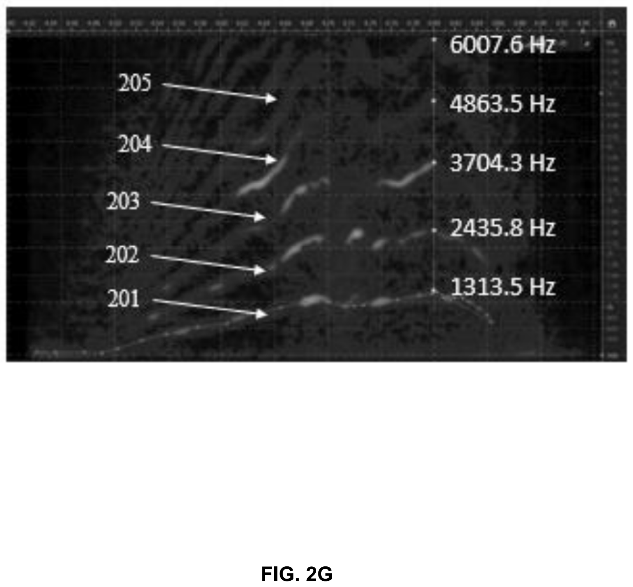

When a finger is sliding along the direction of the arrow in FIG. 2F on the inclined tooth structure at a speed *Vx, dx* remains constant and *dx* = dr. A fundamental frequency of the friction signal generated at this time is *f0* = 2*Vx*/*dx*. It may be seen that the sliding speed *Vx* of the finger and the spacing *dx* between adjacent teeth determine the fundamental frequency of the friction signal. Therefore, when the sliding speed remains substantially the same, the spacing between adjacent teeth determines the fundamental frequency of the friction signal. In this case, by setting the spacing between adjacent teeth, the degree of difference in the fundamental frequency of the friction signals generated by finger sliding in the two sliding regions (i.e., an inclined tooth structure covered area and a smooth area) may be increased. In addition, the material and shape of a single tooth in the inclined tooth structure determine the peak intensity of the frequency of the friction signal. FIG. 2G is a frequency distribution graph of a friction signal generated by finger sliding in an inclined tooth structure according to some embodiments of the present disclosure. It may be seen from FIG. 2G that the friction signal generated by finger sliding in the inclined tooth structure has a plurality of characteristic frequency lines. Each characteristic frequency line basically shows a trend of frequency first increasing and then decreasing, and each characteristic frequency line has its own peak frequency. The FIG. 2G indicates that the peak frequency on the characteristic frequency line 201 is 1313.5Hz, the peak frequency on the characteristic frequency line 202 is 2435.8Hz, the peak frequency on the characteristic frequency line 203 is 3704.3Hz, the peak frequency on the characteristic frequency line 204 is 4863.5Hz, and the peak frequency on the characteristic frequency line 205 is 6007.6Hz. The fundamental frequency of the friction signal and its higher-order harmonics constitute an acoustic fingerprint of the friction signal.

For more details on the material design, the roughness design, and/or the surface structure design, reference may be made to the descriptions above, which will not be repeated here.

In some embodiments, the two sliding regions may be designed with specific features so that the friction signals generated by finger sliding in the two sliding regions may have different peak situations (e.g., whether there are one or more peaks, the peak count, the time of occurrence of one or more peaks), so that the sliding direction may be determined based on the peak features in the friction signal. Slits may cause the are one or more peaks to appear in the friction signal generated by a sliding operation in a sliding region. Based on this, in some embodiments, different slit arrangements may be made on the two sliding regions, such that the first friction signal generated by the finger sliding in the first sliding region 151 and the second friction signal generated by the finger sliding in the second sliding region 152 are distinguishable. The distinguishability is manifested in that the first friction signal and the second friction signal have at least a difference in peak features. In some embodiments, a plurality of slits may be arranged on the first sliding region 151, and no slits are arranged on the second sliding region 152. When a finger slides in the first sliding region 151, the slits may cause peaks to appear in the one or more friction signals generated by the sliding operation, while when a finger slides in the second sliding region 152, the generated one or more friction signals has basically no peaks. Thus, the sliding direction may be determined based on the time of occurrence of peaks in the one or more friction signals. As another example, the first sliding region 151 and the second sliding region 152 may be provided with different counts of slits, so that the sliding direction may be determined based on the peak time distribution in the friction signals. For example, if peaks appear in the initial phase of sliding, the sliding direction may be determined as being from the first sliding region 151 (with the slits) to the second sliding region 152 (without the slits). If peaks appear in the later phase of sliding, the sliding direction may be determined as being from the second sliding region 152 (without the slits) to the first sliding region 151 (with the slits). When a finger slides across the two sliding regions, the initial phase of sliding refers to the time period corresponding to the first sliding region the finger slides over, and the later phase of sliding refers to the time period corresponding to the second sliding region the finger slides over.

In some embodiments, different counts of slits may be arranged on the first sliding region 151 and the second sliding region 152, thereby determining the sliding direction based on the count of peaks appearing in the friction signal. For example, if the count of slits arranged on the first sliding region 151 is greater than the count of slits on the second sliding region 152, then the count of peaks in the first friction signal generated by the finger sliding in the first sliding region 151 will be greater than the count of peaks in the second friction signal generated by the finger sliding in the second sliding region 152. The sliding direction may be determined by comparing the count of peaks in the friction signals generated during the initial and later phases of sliding. If the count of peaks in the friction signal generated during the initial phase of sliding is greater, the sliding direction may be determined as being from the first sliding region 151 to the second sliding region 152. If the count of peaks in the friction signal generated during the later phase of sliding is greater, the sliding direction may be determined as being from the second sliding region 152 to the first sliding region 151.

In some embodiments, the depth of a slit may affect the intensity of the peak caused by the slit. The depth of the slit refers to the dimension that the slit extends from the surface of the core housing toward the interior of the sound production component. Within a certain range, the deeper the slit, the higher the intensity of the peak it causes; the shallower the slit, the lower the intensity of the peak it causes. In some embodiments, the depths of the slits arranged on the first sliding region 151 and the second sliding region 152 may be different, thereby determining the sliding direction based on the intensity of the peaks appearing in the friction signal. For example, if the depth of the slits arranged on the first sliding region 151 is greater than the depth of the slits on the second sliding region 152, then the peak intensity of the peaks in the first friction signal generated by the finger sliding in the first sliding region 151 will be higher than the peak intensity of the peaks in the second friction signal generated by the finger sliding in the second sliding region 152. If the peak intensity in the friction signal is first high and then low, the sliding direction may be determined as being from the first sliding region 151 to the second sliding region 152. If the peak intensity is first low and then high, the sliding direction may be determined as being from the second sliding region 152 to the first sliding region 151.

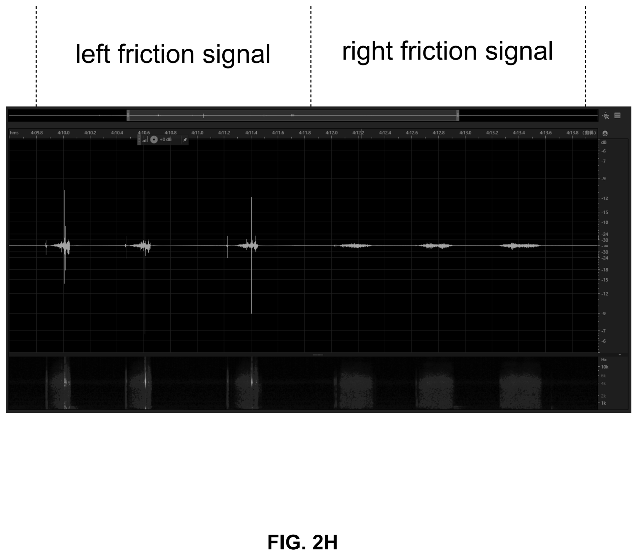

FIG. 2H is a result graph of friction signals according to some embodiments of the present disclosure. The left friction signal in FIG. 2H represents the friction signal generated by the finger sliding in the first sliding region 151 (with slits), and the right friction signal represents the friction signal generated by the finger sliding in the second sliding region 152 (without slits). It may be seen from FIG. 2H that the left friction signal has peaks, while the right friction signal has no peaks.

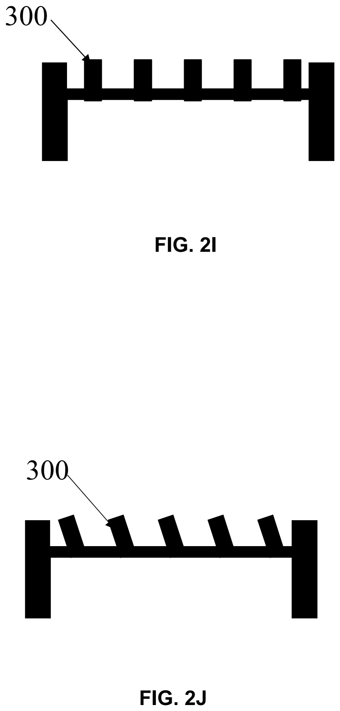

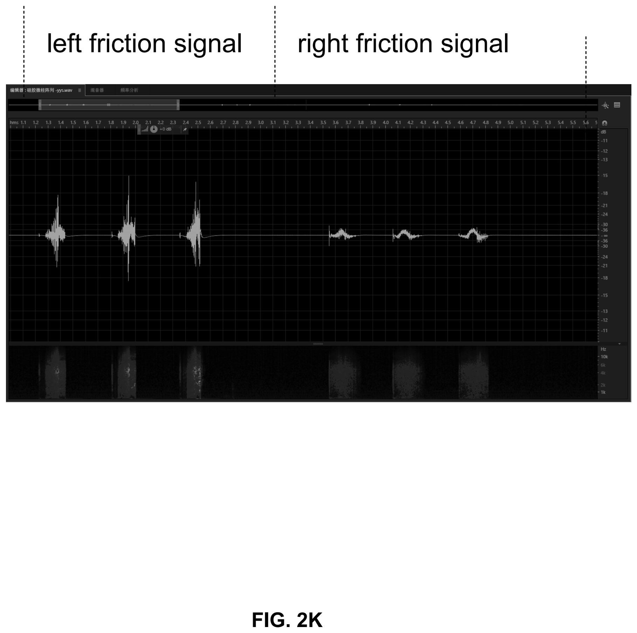

In some embodiments, an array structure may also be arranged on at least one of the one or more sliding regions. When a finger slides over the array structure, the rebound and impact of the array structure itself may cause peaks or jumps to appear in the one or more friction signals generated by the sliding operation. Thus, the sliding direction may be determined based on characteristics of the peaks or jumps. Preferably, the material of the array structure may be a flexible material. In some embodiments, a constituent unit of the array structure may include, but are not limited to, a micropillar, a groove, etc. FIG. 2I and FIG. 2J are schematic diagrams illustrating exemplary micropillars according to some embodiments of the present disclosure. As shown in FIG. 2I and FIG. 2J, micropillars 300 may be arranged in an array on the one or more sliding regions. When a finger slides over the micropillars 300, the rebound and impact of the micropillars 300 itself may cause a peak or a jump to appear in the one or more friction signals generated by the sliding operation. In some embodiments, the micropillars 300 may be arranged vertically (as shown in FIG. 2I) or obliquely (as shown in FIG. 2J). In some embodiments, when the parameters of the micropillars 300 are different, a count, intensity, etc., of the peaks or jumps in the one or more friction signals are different. In some embodiments, to ensure that the sliding direction may be determined from the peaks or the jumps in the one or more friction signals, the micropillars 300 may have the parameters in a suitable range. As an example, a diameter of a micropillar 300 may be 0.5mm~2mm, a gap between adjacent micropillars 300 may be 1mm~10mm, and a height of a micropillar 300 may be 0.5mm~5mm. FIG. 2k is a result graph of friction signals according to some embodiments of the present disclosure. The left friction signal in FIG. 2k represents the friction signal generated by finger sliding one or more sliding regions provided with a micropillar array, and the right friction signal represents the friction signal generated by finger sliding one or more sliding regions without a micropillar array. It may be seen from FIG. 2k that the left friction signal has peaks, while the right friction signal has no peaks.

In some embodiments, the material design, the roughness design, and/or the surface structure design may also be applied to the two sliding regions to make the peak features of the friction signals generated by the sliding operation have the relatively obvious difference. For more details on the material design, the roughness design, and/or the surface structure design, reference may be made to the descriptions above, which will not be repeated here.

In some embodiments, the two sliding regions may be designed with specific features to impart discontinuity to the friction signals generated when a user's finger slides in the two sliding regions, so that the sliding direction may be determined based on the discontinuity of the friction signal. In some embodiments, the two sliding regions may have different array structure designs, such that the first friction signal generated by the finger sliding in the first sliding region 151 and the second friction signal generated by the finger sliding in the second sliding region 152 are distinguishable. The distinguishability is manifested in that the first friction signal and the second friction signal have a difference in discontinuity features. In some embodiments, the array structure may be arranged on at least one of the one or more sliding regions. When a finger slides over the array structure, the finger repeatedly contacts and detaches from the array structure, thereby being able to produce a clear discontinuity feature in the friction signal (i.e., the friction signal has discontinuity). Thus, the sliding direction may be determined based on the discontinuity of the friction signal. For example, a friction signal is generated when the finger contacts the array structure, and no friction signal is generated when it detaches from the array structure. The repeated contact and detachment with the array structure result in the final friction signal exhibiting discontinuity features. In some embodiments, the material of the array structure may be a hard material.

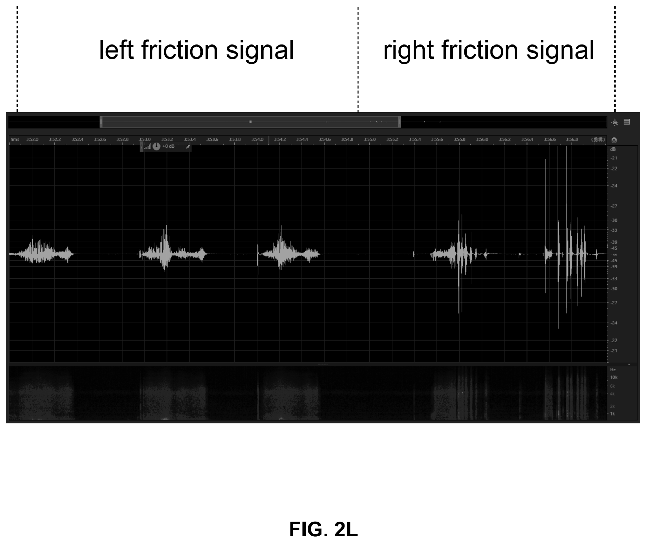

In some embodiments, the constituent unit of the array structure may include, but are not limited to, micropillars (the structure and arrangement of the micropillars may be referred to in FIG. 2I and FIG. 2J, and their related descriptions), the groove, etc. FIG. 2L is a result graph of friction signals according to some embodiments of the present disclosure. The left friction signal in FIG. 2L represents the friction signal generated by finger sliding in one or more sliding regions provided with a hard micropillar array, and the right friction signal represents the friction signal generated by finger sliding in one or more sliding regions without a hard micropillar array. It may be seen from FIG. 2L that the left friction signal has discontinuities and exhibits discontinuity. The discontinuity here may be manifested in that the time-domain signal corresponding to the left friction signal has discontinuity.

In some embodiments, the material design, the roughness design, and/or the surface structure design may also be applied to the two sliding regions to make the discontinuity of the friction signals generated by the sliding operation have the relatively obvious difference. For more details on the material design, the roughness design, and/or the surface structure design, reference may be made to the descriptions above, which will not be repeated here.

The foregoing describes increasing the difference between friction signals generated by different sliding directions by designing features (e.g., the material, the roughness, the surface structure, the microstructure, the slits, the array structure) for the first sliding region and the second sliding region, which should be understood as being at the level of the friction signal generation. In some embodiments, the difference between friction signals may also be increased at other levels, for example, at a level of friction signal propagation and friction signal collection.

In some embodiments, the friction signals generated by the sliding operation may be collected by a microphone. Therefore, the difference in the friction signals may be further increased by setting the position of the microphone in the earphone 150. In some embodiments, the position of the microphone (especially an air conduction microphone) may be set closer to one sliding sub-region, and correspondingly, the microphone will be farther away from the other sliding sub-region. In this case, the intensity of the friction signals collected by the microphone for different sliding directions has a large difference in the time domain. Taking the microphone being closer to the first sliding region 151 and farther from the second sliding region 152 as an example, when the user's finger slides from the first sliding region 151 to the second sliding region 152, the intensity of the one or more friction signals collected by the microphone is first large and then decreases; when the user's finger slides from the second sliding region 152 to the first sliding region 151, the intensity of the one or more friction signals collected by the microphone is first small and then increases. Thus, by setting the position of the microphone relative to the first sliding region 151 and/or the second sliding region 152, the difference in the intensity of the friction signals collected by the microphone for different sliding directions in the time domain may be increased, thereby improving the accuracy of sliding direction identification. In some embodiments, a ratio of distances between the microphone and the two sliding sub-regions (e.g., a ratio of a distance between the microphone and the second sliding region 152 to a distance between the microphone and the first sliding region 151) may be greater than or equal to 1. In some embodiments, to increase the difference in the intensity of the friction signals collected by the microphone for different sliding directions in the time domain, the ratio of the distances between the microphone and the two sliding sub-regions may be greater than or equal to 1.5. In some embodiments, to increase the difference in the intensity of the friction signals collected by the microphone for different sliding directions in the time domain, the ratio of the distances between the microphone and the two sliding sub-regions may be greater than or equal to 2. In some embodiments, to increase the difference in the intensity of the friction signals collected by the microphone for different sliding directions in the time domain, the ratio of the distances between the microphone and the two sliding sub-regions may be greater than or equal to 3. In some embodiments, to increase the difference in the intensity of the friction signals collected by the microphone for different sliding directions in the time domain, the ratio of the distances between the microphone and the two sliding sub-regions may be greater than or equal to 4. In some embodiments, to increase the difference in the intensity of the friction signals collected by the microphone for different sliding directions in the time domain, the ratio of the distances between the microphone and the two sliding sub-regions may be greater than or equal to 5. The distance between the microphone and a sliding sub-region may refer to a distance between the geometric center of the sound inlet of the air conduction microphone and the geometric center of the sliding sub-region.

In some embodiments, acoustic materials (e.g., sound-absorbing materials or reinforcing materials) may be arranged in the propagation path of the friction signal, so that the friction signal generated by the sliding operation on one sliding sub-region is enhanced or attenuated at a specific frequency, thereby increasing the difference in a frequency distribution of the friction signals generated by different sliding directions and improving the accuracy of identifying the sliding direction. For example, a sound-absorbing material (e.g., sound-absorbing cotton, acoustic mesh, etc.) may be arranged on the inner surface of the first sliding region 151 (the side facing the interior of the sound production component). In this case, when the one or more friction signals generated by the finger sliding in the first sliding region 151 is transmitted to the microphone, the one or more friction signals at a specific frequency is absorbed and attenuated by the sound-absorbing material, thereby increasing the difference in the frequency distribution of the friction signals generated by different sliding directions. In some embodiments, an obstruction may be formed in the propagation path of the friction signal, so that the friction signal generated by the sliding operation on one sliding subregion is attenuated at a specific frequency due to the obstruction, thereby increasing the difference in the frequency distribution of the friction signals generated by different sliding directions. For example, if the microphone is located between the first sliding region 151 and the second sliding region 152, a baffle may be arranged on the side of the microphone close to the first sliding region 151. The baffle may block the transmission of the friction signal generated by the sliding operation on the first sliding region 151 to the microphone, causing the friction signal generated by the sliding operation on the first sliding region 151 to be attenuated at a specific frequency, thereby increasing the difference in the frequency distribution of the friction signals generated by different sliding directions. In other embodiments, the housing structure of the earphone may also be used to form the obstruction.

In some embodiments, considering that the one or more friction signals generated by the sliding operation is greatly affected by individual operational factors, the structure of the one or more sliding region may be further optimized to make the acoustic features of the one or more friction signals generated by the sliding operation have a more significant difference, thereby reducing the influence of the individual operational factors on the one or more friction signals and further improving the accuracy of sliding direction judgment. For example, when an array structure is designed on at least one of the one or more sliding regions, the degree of difference in the acoustic features of the one or more friction signals generated by the sliding operation may be further increased by setting the height of the micropillars in the array structure and the distance between different micropillars.

It should be noted that the earphone 150 is only an exemplary structure of a terminal device for describing the design of the one or more sliding regions. The design of the one or more sliding region on other terminal devices may refer to the description of the one or more sliding regions on the earphone 150.

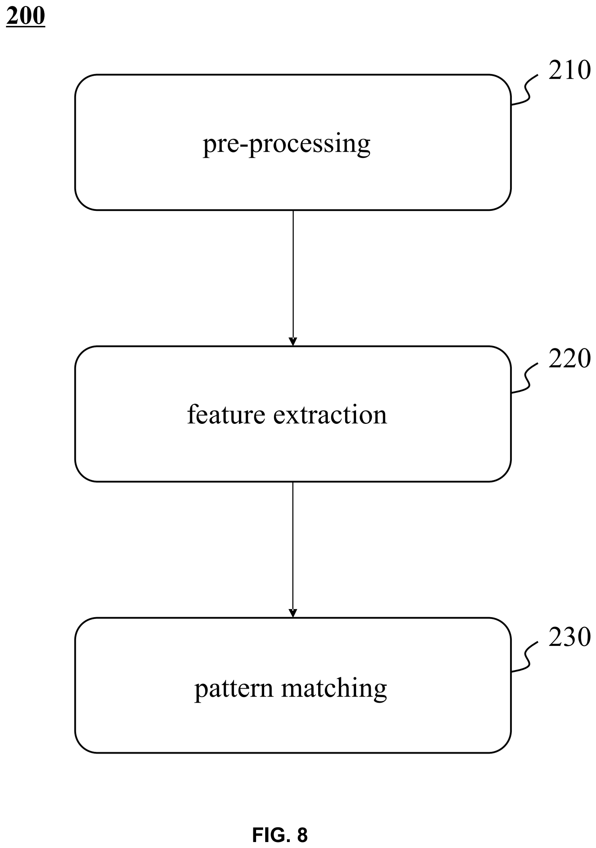

FIG. 8 is a schematic flowchart illustrating a friction signal identification process according to some embodiments of the present disclosure. As shown in FIG. 8, the friction signal identification process 200 may include pre-processing 210, feature extraction 220, and pattern matching 230. The process 200 may be executed by a processing circuit in an earphone (or other device).

The pre-processing 210 may refer to pre-processing one or more friction signals. In some embodiments, the pre-processing 210 may include a collection of the friction signal. In some embodiments, the microphone may be used to collect the one or more friction signals generated by a sliding operation. In some embodiments, the microphone for collecting the one or more friction signals may be the air conduction microphone or the bone conduction microphone. The air-conducted friction signal may be generated by the finger sliding in the one or more sliding regions. When using the air conduction microphone to collect the one or more friction signals, the air conduction microphone may be located in an area close to the one or more sliding regions. When the terminal device is an earphone, the speaker of the earphone itself will also output sound, and the signal output by the speaker can interfere with the one or more friction signals generated by the finger sliding. Therefore, placing the air conduction microphone closer to the one or more sliding regions can reduce the influence of the signal output by the earphone on the one or more friction signals generated by the sliding operation. For example, in conjunction with the earphone 150 in FIG. 2A, the air conduction microphone may be located in the sound production component 154 near the one or more sliding regions, and the opening of the air conduction microphone is located on the outer surface of the core housing (the one or more sliding regions). In some embodiments, when the microphone collects the one or more friction signals generated by the sliding operation, it will inevitably also collect the signal output by the speaker. In this case, before identifying the sliding operation, the signal output by the speaker may first be eliminated by an algorithm to improve the accuracy of the friction signal collection. In some embodiments, the bone-conducted friction signal may be generated when sliding in the one or more sliding regions. When using the bone conduction microphone to collect the bone-conducted friction signal, the bone conduction microphone may be located at any position on the terminal device, as long as it is ensured that the bone conduction microphone is fixedly connected to the one or more sliding regions. For example, the bone conduction microphone may be located at any position within the sound production component 154. When a user uses the terminal device, the user may slide in the one or more sliding regions (it must be ensured that both sliding regions may be slid upon), and the microphone may collect the one or more friction signals generated by the sliding operation of the user. Compared to the air conduction microphone, on the one hand, the position of the bone conduction microphone is almost unrestricted (it may be located at any position on the terminal device, as long as it is ensured that the bone conduction microphone is fixedly connected to the one or more sliding regions), and on the other hand, the one or more friction signals collected by the bone conduction microphone is not affected by the signal output by the speaker. Preferably, the bone conduction microphone may be used to collect the one or more friction signals. In some embodiments, the microphone may be a microphone that comes with the terminal device itself. For example, the microphone in the earphone that collects the wearer's speaking voice may also be used to collect the one or more friction signals generated by the sliding operation. In some embodiments, the microphone may also be provided separately. The microphone for collecting the speaking voice of the wearer and the microphone for collecting the one or more friction signals generated by the sliding operation may be different microphones. For example, when the microphone for collecting the speaking voice of the wearer is an air conduction microphone, another bone conduction microphone may be provided in the air conduction microphone or the earphone, and the bone conduction microphone is used to collect the one or more friction signals generated by the sliding operation, thereby ensuring that the collected one or more friction signals generated by the sliding operation is not affected by the signal output by the speaker, and improving the accuracy of the sliding direction identification.

In some embodiments, the pre-processing 210 may include correcting the collected one or more friction signals, for example, pre-emphasizing components of the friction signal at certain frequencies. For illustrative purposes, when the friction signal (such as the sound signal) propagates through a medium, the attenuation of the friction signal by the medium is different for different frequency components. For example, in a solid medium, it is easier to propagate high-frequency components of the friction signal, which leads to greater attenuation of low-frequency components of the friction signal. When the bone conduction microphone is used to collect the one or more friction signals generated by the sliding operation of the user, the low-frequency components in the friction signal may be pre-emphasized to compensate for the low-frequency attenuation during the vibration transmission process. A transfer function may be used to filter out the high-frequency components from the collected one or more friction signals, then the remaining low-frequency components are enhanced, and finally the high-frequency components are combined with the enhanced low-frequency components to obtain a complete friction signal with low-frequency emphasis.

The feature extraction 220 refers to a process of extracting one or more features from the collected one or more friction signals. The features of the friction signal may include one or more time domain features and one or more frequency domain features. The time domain features may include a time when a peak appears in the friction signal in the time domain, and the characteristic of the regular change in the appearance of peaks. The frequency domain features may include spectral parameters. The spectral parameters may include, but are not limited to, a frequency component distribution, a mean frequency, a root mean square frequency, a frequency variance, a frequency standard deviation, etc. In some embodiments, extraction algorithms for the friction signal may include one or more of short-time Fourier transform, discrete cosine transform, discrete wavelet transform, Mel spectrum, and Mel-frequency cepstrum.

The pattern matching 230 refers to a process of comparing or matching a processed friction signal or extracted features of the friction signal with a standard signal, thereby being able to identify the sliding direction. In some embodiments, the one or more friction signals generated by the sliding operation of the user (recorded as a friction signal to be identified) or its features may be compared with the standard signal to determine an overlap degree of the friction signal and the standard in the time domain, thereby judging the sliding direction. When the overlap degree of is higher than an overlap threshold (e.g., 90%), it may be considered that the friction signal to be identified and the standard signal approximately overlap, and the sliding direction corresponding to the friction signal to be identified is determined based on the sliding direction corresponding to the standard signal (i.e., the sliding direction corresponding to the standard signal is consistent with the sliding direction corresponding to the signal to be identified).

It should be noted that the features of the one or more friction signals generated by the sliding operation in the time domain will be affected by the sliding speed and/or the sliding force. For example, a fast sliding speed corresponds to a short sliding friction signal duration; a slow sliding speed corresponds to a long duration of sliding friction signal; a large sliding force corresponds to a relatively loud friction signal; a small sliding force corresponds to a relatively quiet sliding friction signal. In some embodiments, the influence of the sliding speed and/or the sliding force on the friction signal may be reduced by an algorithm, thereby improving the accuracy of judging the overlap degree.

In some embodiments, the pattern matching 230 may be implemented by means of machine learning, i.e., a machine learning model may be used to determine the sliding direction. For example, the extracted frequency domain features of the friction signal to be identified may be input into a trained machine learning model, and the machine learning model may output the sliding direction corresponding to the extracted frequency domain features.

In some embodiments, a plurality of friction signals may be collected as friction signal samples for training a machine learning model. In some embodiments, a duration of a single collected friction signal (a friction signal generated by a sliding operation) may be 0.5s~2s, and a time interval between two samplings may be 0.2s~1s, to ensure that a silent interval between samplings is greater than the silent interval during sampling. In some embodiments, to ensure the consistency of the friction signal samples and avoid information redundancy caused by excessively high sampling rate or information loss due to excessively low sampling rate, a plurality of the sampling rates may be set to resample each of at least a portion of the plurality of friction signals.

In some embodiments, the pre-processing of a friction signal sample may include a friction signal segmentation. The friction signal sample may be segmented to facilitate the subsequent training of the machine learning model. In some embodiments, the friction signal sample may be segmented into individual fragments according to the silent interval. For example, manners such as silence removal or voice activity detection may be used to analyze the friction signal sample, identifying silent segments and signal segments in the friction signal sample. The friction signal sample is segmented into friction signal fragments of the same length with the center of the signal segment as the segmentation point. Further, subsequent processing (such as pre-emphasis, feature extraction, etc.) may be performed for each friction signal fragment.

In some embodiments, the pre-processing of a friction signal sample may include pre-emphasis. In some embodiments, when the friction signal propagates through the medium, the attenuation of the friction signal by the medium is different for different frequency component. For example, in the solid medium, it is easier to propagate the high-frequency components of a friction signal, which leads to greater attenuation of the low-frequency components of a friction signal. When the bone conduction microphone is used to collect the friction signal samples, the low-frequency components in the friction signal sample may be pre-emphasized to compensate for the low-frequency attenuation during the vibration transmission process. In some embodiments, the transfer function may be used for filtering to achieve pre-emphasis of low-frequency components. The transfer function may be used to filter out the high-frequency components from the friction signal sample, then the remaining low-frequency components are enhanced, and finally the high-frequency components are combined with the enhanced low-frequency components to obtain a complete friction signal sample with low-frequency emphasis.

In some embodiments, the feature extraction, such as extracting the frequency domain features, may be performed on the friction signal samples processed as described above. The extracted frequency domain features may be used to train the machine learning model. In some embodiments, the input of the machine learning model may be the frequency domain features of the friction signal samples, the output of the machine learning model may be the sliding direction corresponding to the frequency domain features (e.g., sliding in the first direction or sliding in the second direction), and the training label is the frequency domain features with a manually annotated sliding direction. The frequency domain features with label may be input into an initial machine learning model to obtain an output result of the initial machine learning model. The parameters of the initial machine learning model are updated through training until the intermediate machine learning model being trained meets a preset condition, and the trained machine learning model is obtained. The preset condition may be that a loss function is less than a threshold, convergence is reached, or a training period reaches a threshold.

It should be noted that in other embodiments, the collected one or more friction signals may also be directly input into a machine learning model, and the machine learning model outputs the sliding direction corresponding to the collected one or more friction signals or an operation instruction corresponding to the sliding direction. In this manner, the training samples for the machine learning model are the collected friction signals, and these friction signals may not undergo feature extraction operations (other pre-processing operations, such as the friction signal segmentation, the pre-emphasis, may be determined as appropriate), but are directly used for model training.

In some embodiments, for different users, the one or more friction signals generated by the sliding operations of the users in different sliding directions may be recorded in advance, and the machine learning model is further trained on the one or more friction signals collected for each user. It should be understood here that the terminal device has an initial calibration training process, which specifically trains the machine learning model based on the friction signals generated by sliding operation of each user (e.g., different sliding directions, sliding with the left/right hand, sliding with different fingers, etc.) to eliminate differences in the friction signals caused by operating habits of different users, thereby further improving the judgment accuracy of the machine learning model.

In some embodiments, considering that the stability of the terminal device is different in different states, such as a worn state and a non-worn state, the friction signals obtained from the sliding operation of the user in the one or more sliding regions will also be different. For example, in the non-worn state, the earphone 150 is relatively stable, and the sliding operation of the user in the one or more sliding regions will basically not cause the earphone 150 to move, and the collected one or more friction signals at this time is relatively stable, and the features of the friction signal are more obvious. As another example, in the worn state, the sliding operation of the user in the one or more sliding regions may cause the earphone 150 to shake (e.g., when a user wears the earphone 150 of FIG. 2A, sliding from the second sliding region 152 to the first sliding region 151 may cause the earphone 150 to move outward from the ear), which will generate noise, and the collected friction signal at this time will be more complex, and the difficulty of judging the sliding direction based on the features of the friction signal increases. Based on this, different algorithms may be selected to process and extract features from the friction signal according to the state of the earphone 150, thereby improving the accuracy of the sliding direction judgment For example, the situation when the earphone 150 is in the worn state is more complex, and an algorithm with higher computational power may be selected for processing to improve the accuracy of the sliding direction judgment. As another example, the situation when the earphone 150 is in the non-worn state is simpler, and a streamlined algorithm may be selected for processing to reduce the amount of computation and improve the speed of operation.

Having thus described the basic concepts, it may be rather apparent to those skilled in the art after reading this detailed disclosure that the foregoing detailed disclosure is intended to be presented by way of example only and is not limiting. Although not explicitly stated here, those skilled in the art may make various modifications, improvements and amendments to the present disclosure. These alterations, improvements, and modifications are intended to be suggested by this disclosure, and are within the spirit and scope of the exemplary embodiments of this disclosure.

Moreover, certain terminology has been used to describe embodiments of the present disclosure. As in "an embodiment", "an embodiment", and/or "some embodiments" means a feature, structure, or characteristic associated with at least one embodiment of the present application. Accordingly, it should be emphasized and noted that two or more references to "one embodiment" or "one embodiment" in different locations in this specification are not intended to refer to the same embodiment. In addition, some features, structures, or features in the present disclosure of one or more embodiments may be appropriately combined.

Furthermore, the recited order of processing elements or sequences, or the use of numbers, letters, or other designations, therefore, is not intended to limit the claimed processes and methods to any order except as may be specified in the claims. Although the above disclosure discusses some embodiments of the invention currently considered useful by various examples, it should be understood that such details are for illustrative purposes only, and the additional claims are not limited to the disclosed embodiments. Instead, the claims are intended to cover all combinations of corrections and equivalents consistent with the substance and scope of the embodiments of the present disclosure. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. However, this disclosure does not mean that object of the present disclosure requires more features than the features mentioned in the claims. Rather, claimed subject matter may lie in less than all features of a single foregoing disclosed embodiment.

In some embodiments, the numbers expressing quantities or properties used to describe and claim certain embodiments of the present disclosure are to be understood as being modified in some instances by the term "about," "approximate," or "substantially,". For example, "about," "approximate," or "substantially," may indicate ±20% variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the present disclosure are approximations, the numerical values set forth in the specific examples are reported as precisely as practicable.

Each of the patents, patent applications, publications of patent applications, and other material, such as articles, books, specifications, publications, documents, things, and/or the like, referenced herein is hereby incorporated herein by this reference in its entirety for all purposes. History application documents that are inconsistent or conflictive with the contents of the present disclosure are excluded, as well as documents (currently or subsequently appended to the present specification) limiting the broadest scope of the claims of the present disclosure. By way of example, should there be any inconsistency or conflict between the description, definition, and/or the use of a term associated with any of the incorporated material and that associated with the present document, the description, definition, and/or the use of the term in the present document shall prevail.

In closing, it is to be understood that the embodiments of the present disclosure disclosed herein are illustrative of the principles of the embodiments of the present disclosure. Other modifications that may be employed may be within the scope of the present disclosure. Thus, by way of example, but not of limitation, alternative configurations of the embodiments of the present disclosure may be utilized in accordance with the teachings herein. Accordingly, embodiments of the present disclosure are not limited to that precisely as shown and described.

**Claims**

1. A device for identifying a touch operation using friction signals, wherein at least part of a surface of the device serves as sliding regions, the sliding regions include a first sliding region and a second sliding region, the first sliding region and the second sliding region have different features, and the features are manifested in distinguishability of a friction signal generated by a finger sliding in the first sliding region and a friction signal generated by a finger sliding in the second sliding region in a time domain or a frequency domain.

2. The device according to claim 1, wherein the distinguishability is manifested in that the friction signal generated by the finger sliding in the first sliding region and the friction signal generated by the finger sliding in the second sliding region have a difference in amplitudes.

3. The device according to claim 2, wherein the first sliding region and the second sliding region have different porosities.

4. The device according to claim 1, wherein the distinguishability is manifested in that the friction signal generated by the finger sliding in the first sliding region and the friction signal generated by the finger sliding in the second sliding region have a difference in peak features.

5. The device according to claim 4, wherein the peak features include at least one of a peak count, a peak time distribution, or a peak intensity.

6. The device according to claim 1, wherein the distinguishability is manifested in that the friction signal generated by the finger sliding in the first sliding region and the friction signal generated by the finger sliding in the second sliding region have a difference in discontinuity features.

7. The device according to claim 6, wherein an array structure is arranged on one of the first sliding region and the second sliding region, and a material of the array structure is a hard material.

8. The device according to claim 1, wherein the distinguishability is manifested in that the friction signal generated by the finger sliding in the first sliding region and the friction signal generated by the finger sliding in the second sliding region have a difference in frequencies.

9. The device according to claim 8, wherein a fundamental frequency of the friction signal generated by the finger sliding in the first sliding region is different from a fundamental frequency of the friction signal generated by the finger sliding in the second sliding region.

10. The device according to claim 8, wherein a peak frequency of the friction signal generated by the finger sliding in the first sliding region is different from a peak frequency of the friction signal generated by the finger sliding in the second sliding region.

11. The device according to claim 8, wherein the first sliding region and the second sliding region have different natural resonant frequencies.

12. The device according to claim 1, wherein the distinguishability is manifested in that a proportion of signal components within a specific frequency or a specific frequency range in the friction signal generated by the finger sliding in the first sliding region is different from a proportion of signal components within the specific frequency or the specific frequency range in the friction signal generated by the finger sliding in the second sliding region.

13. The device according to claim 1, wherein the different features of the first sliding region and the second sliding region include material features, roughness features, and surface structure features.

14. The device according to claim 1, wherein the device includes a processing circuit, and the processing circuit is configured to identify a sliding direction of a finger based on the friction signal generated by the finger sliding in the first sliding region and the friction signal generated by the finger sliding in the second sliding region.

15. A device for identifying a touch operation using friction signals, wherein at least part of a surface of the device serves as sliding regions, the sliding regions include a first sliding region and a second sliding region, the first sliding region and the second sliding region have different features, and the features include material features, roughness features and surface structure features.

16. The device according to claim 15, wherein the material features include: an elastic modulus and/or a hardness of a material of the first sliding region being different from an elastic modulus and/or a hardness of a material of the second sliding region.

17. The device according to claim 16, wherein a difference between a Shore hardness of the material of the first sliding region and a Shore hardness of the material of the second sliding region is within a range of 42HD-86HD.

18. The device according to claim 15, wherein the roughness features include: particles arranged on the first sliding region having parameters different from particles arranged on the second sliding region, and the parameters of the particles include a particle shape, a particle size, a particle count, and a particle spacing.

19. The device according to claim 15, wherein the roughness features include: stripes arranged on the first sliding region having parameters different from stripes arranged on the second sliding region, and the parameters of the stripes include stripe width, stripe height, and stripe spacing.

20. The device according to claim 15, wherein surface structure designs include: surface structures arranged on the first sliding region being different from surface structures arranged on the second sliding region, and the surface structures include a planar structure and a gradient structure.

21. The device according to claim 20, wherein a differentiation of the gradient structure is manifested in slope and direction.

22. The device according to claim 15, wherein the first sliding region and the second sliding region have different porosities.

23. The device according to claim 15, wherein the first sliding region and the second sliding region have different natural resonant frequencies.

24. The device according to claim 23, wherein at least one of a wave plate, a chord, a beam, a membrane, or a cavity with differentiated configurations is arranged on the first sliding region and the second sliding region.

25. The device according to claim 23, wherein a microstructure is arranged on one of the first sliding region and the second sliding region, and the microstructure includes a spring sheet.

26. The device according to claim 15, wherein an array structure is arranged on one of the first sliding region and one of the second sliding region, and a material of the array structure is a flexible material.

27. The device according to claim 26, wherein a constituent unit of the array structure includes a micropillar or a groove.

28. The device according to claim 15, wherein an array structure is arranged on one of the first sliding region and the second sliding region, and a material of the array structure is a hard material.

29. The device according to claim 28, wherein a constituent unit of the array structure include a micropillar or a groove.

30. The device according to claims 15-29, wherein the features are manifested in distinguishability of the friction signal generated by the finger sliding in the first sliding region and the friction signal generated by the finger sliding in the second sliding region in at least one of amplitudes, peak features, discontinuity features, and frequency domains.

31. The device according to claim 15, wherein the device includes a processing circuit, and the processing circuit is configured to identify a sliding direction of the finger based on the friction signal generated by the finger sliding in the first sliding region and the friction signal generated by the finger sliding in the second sliding region.

**100**

**FIG. 1**

FIG. 2A

left friction signal | right friction signal

**FIG. 2B**

**FIG. 2C**

FIG. 2D

151-2

(a)

151-2

(b)

(c)

151-3

(d)

151-1

(e)

151-4

(f)

**FIG. 2E**

**FIG. 2F**

**FIG. 2G**

**FIG. 2H**

300

**FIG. 2I**

300

**FIG. 2J**

FIG. 2K

**FIG. 2L**

**FIG. 3A**

**FIG. 3B**

151

152

**FIG. 3C**

**FIG. 4A**

**FIG. 4B**

**FIG. 5**

**FIG. 6**

151

152

*dx*

**FIG.7A**

151

152

**FIG.7B**

151    152

**FIG.7C**

left friction signal | right friction signal

**FIG.7D**

**200**

```
┌─────────────────────────────────┐
│                                 │ ⌇ 210
│          pre-processing         │
│                                 │
└─────────────────────────────────┘
                 │
                 ▼
┌─────────────────────────────────┐
│                                 │ ⌇ 220
│        feature extraction       │
│                                 │
└─────────────────────────────────┘
                 │
                 ▼
┌─────────────────────────────────┐
│                                 │ ⌇ 230
│         pattern matching        │
│                                 │
└─────────────────────────────────┘
```

**FIG. 8**

## INTERNATIONAL SEARCH REPORT

| International application No. |
|---|
| **PCT/CN2024/127437** |

**A. CLASSIFICATION OF SUBJECT MATTER**

G06F3/043(2006.01)i; G06F3/041(2006.01)i; H04R1/10(2006.01)i

According to International Patent Classification (IPC) or to both national classification and IPC

**B. FIELDS SEARCHED**

Minimum documentation searched (classification system followed by classification symbols)

IPC: G06F3/-; H04R/-

Documentation searched other than minimum documentation to the extent that such documents are included in the fields searched

Electronic data base consulted during the international search (name of data base and, where practicable, search terms used)

CNTXT, DWPI, ENTXT, ENTXTC, VEN, WPABS, WPABSC, CNKI, 互联网, Internet: 表面, 触控, 触敏, 触摸, 第二区域, 第一区域, 调节, 耳机, 方向, 滑动, 滑过, 划过, 界面, 控制, 摩擦, 区域, 声波, 声音, 音量, 音量加, 音量减, acoustic, earphone, friction, headphone, headset, sound?, region+, adjust+, volume?, control+, area+, rub+

**C. DOCUMENTS CONSIDERED TO BE RELEVANT**

| Category* | Citation of document, with indication, where appropriate, of the relevant passages | Relevant to claim No. |
|---|---|---|
| X | KR 20140143611 A (LG ELECTRONICS INC.) 17 December 2014 (2014-12-17) description, paragraphs [0048]-[0129], and figures 2-4 | 15-29, 31 |
| X | JP 2018073281 A (DENSO TEN LTD.) 10 May 2018 (2018-05-10) description, paragraphs [0014]-[0062], and figures 2-6 | 15-29, 31 |
| Y | KR 20140143611 A (LG ELECTRONICS INC.) 17 December 2014 (2014-12-17) description, paragraphs [0048]-[0129], and figures 2-4 | 1-14, 30 |
| Y | CN 104125523 A (ZHOU XIANGYU) 29 October 2014 (2014-10-29) entire document | 1-14, 30 |
| A | CN 108475112 A (SAMSUNG ELECTRONICS CO., LTD.) 31 August 2018 (2018-08-31) entire document | 1-31 |
| A | WO 2012165098 A1 (NEC CASIO MOBILE COMMUNICATIONS, LTD.) 06 December 2012 (2012-12-06) entire document | 1-31 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **13 November 2024** | **01 January 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/127437** |

| Patent document cited in search report | | | Publication date (day/month/year) | Patent family member(s) | | | Publication date (day/month/year) |
| --- | --- | --- | --- | --- | --- | --- | --- |
| KR | 20140143611 | A | 17 December 2014 | KR | 102018654 | B1 | 05 September 2019 |
| JP | 2018073281 | A | 10 May 2018 | | None | | |
| CN | 104125523 | A | 29 October 2014 | | None | | |
| CN | 108475112 | A | 31 August 2018 | EP | 3361351 | A1 | 15 August 2018 |
| | | | | EP | 3361351 | A4 | 10 October 2018 |
| | | | | EP | 3361351 | B1 | 27 January 2021 |
| | | | | KR | 20170064364 | A | 09 June 2017 |
| | | | | KR | 102437106 | B1 | 26 August 2022 |
| | | | | US | 2018348853 | A1 | 06 December 2018 |
| | | | | US | 10684675 | B2 | 16 June 2020 |
| | | | | WO | 2017095033 | A1 | 08 June 2017 |
| | | | | CN | 108475112 | B | 20 July 2021 |
| WO | 2012165098 | A1 | 06 December 2012 | EP | 2717130 | A1 | 09 April 2014 |
| | | | | JPWO | 2012165098 | A1 | 23 February 2015 |
| | | | | US | 2014111455 | A1 | 24 April 2014 |

Form PCT/ISA/210 (patent family annex) (July 2022)

**EP 4 653 992 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311407961X